# EUROPEAN PATENT SPECIFICATION

(11) **EP 2 533 557 B1**
(45) Date of publication and mention of the grant of the patent: **06.06.2018**
(21) Application number: 11739339.7
(22) Date of filing: 31.01.2011
(51) Int. Cl.: H04W 16/02

(54) **NETWORKING METHOD AND DEVICE FOR FREQUENCY REUSE**
NETZWERKVERFAHREN UND VORRICHTUNG ZUR FREQUENZWIEDERVERWENDUNG
PROCÉDÉ ET DISPOSITIF DE RÉSEAUTAGE POUR UNE RÉUTILISATION DE FRÉQUENCES

(30) Priority: 31.08.2010 CN 201010268723; 03.02.2010 CN 201019114021
(43) Date of publication of application: 12.12.2012
(73) Proprietor: China Mobile Communications Corporation, Beijing 100032 (CN)
(72) Inventor: JIANG, Dajie, Beijing 100032 (CN)
(74) Representative: Studio Torta S.p.A.
(86) International application number: PCT/CN2011/000186
(87) International publication number: WO 2011/095060

(56) References cited:
- WO-A1-2005/079094
- WO-A2-2007/138415
- CN-A- 1 914 944
- CN-A- 101 600 210
- US-A1- 2003 227 889
- US-A1- 2007 298 807
- US-A1- 2009 195 453

## Description

### FIELD OF THE INVENTION

The present invention relates to the field of telecommunication technology, especially to networking method and device for frequency reuse.

### DESCRIPTION OF THE PRIOR ART

Time Division-Synchronous Code Division Multiple Access Long Term Evolution (TD-LTE), as an advanced technology, can increase peak data rate, cell edge rate and spectral efficiency of a system.

In order to achieve coexistence of a TD-LTE system with an existing system (2G/2.5G/3G) and ensure forward-backward compatibility of the system, there exist the following changes in the existing system.
Change 1: at a Radio Access Network (RAN) side, a CDMA technology is changed to an Orthogonal Frequency Division Multiplexing (OFDM) technology, so as to efficiently combat multipath interference of a wideband system.
   The OFDM technology is originated in the 1960s and has been improving and developing thereafter. In the 1990s, along with the development of the signal processing technology, this technology is widely used in technical fields of digital broadcasting, digital subscriber line (DSL), WLAN, and etc. The OFDM technology has advantages of combating multipath interference, being easily implemented, supporting different bandwidths flexibly, a high spectral efficiency and supporting efficient self-adaptive scheduling, thus it is well known as a future 4G technical reserve.
Change 2: in order to further increase the spectral efficiency, a Multiple-Input Multiple-Out-put (MIMO) technology is adopted in the TD-LTE system.
   The MIMO technology can transmit a plurality of data streams simultaneously using the spatial channel characteristics of a multiple antenna system, so as to effectively enhance the data rate and the spectral efficiency.
Change 3: in order to reduce delay of control and user planes and meet the requirement of a low delay (the delay of a control plane is less than 100ms and the delay of a user plane is less than 5ms), the structure of NodeB-RNC-CN in the existing system needs to be simplified. RNC will not exist as a physical entity, and NodeB will have parts of the functions of RNC and becomes an eNodeB. The eNodeBs, among which a web-like interconnection is achieved via an X2 interface, directly access CN.

Currently, the LTE system primarily uses the following two networking modes.

Networking mode 1 is a mode in which a frequency reuse factor is N, wherein N is a positive integer greater than 1. In this mode, a total available frequency band of the LTE system is divided into a plurality of sub-bands according to the values of the frequency reuse factor N. The sub-bands are not overlapped with each other, and different sub-bands are occupied by different cells.

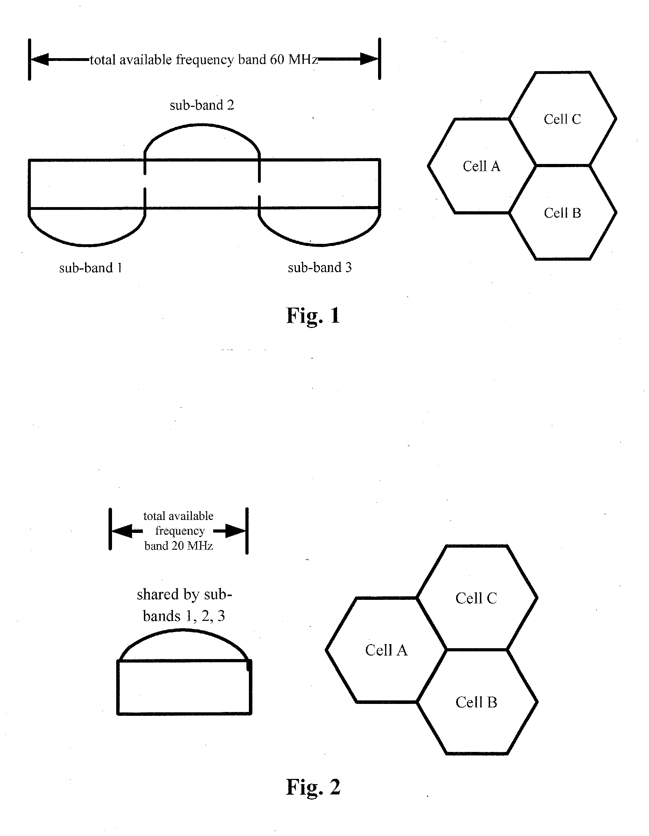

Fig.1 is a schematic view showing the networking of a LTE system when the frequency reuse factor N is 3. When a bandwidth occupied by the total available frequency band of the LTE system is 60M, the bandwidth is divided into three sub-bands of sub-band 1, sub-band 2 and sub-band 3, each with a bandwidth of 20 MHz. These sub-bands are not overlapped with each other, and the sub-bands 1, 2 and 3 are occupied by cells A, B and C respectively.

When the networking mode 1 is used, because the sub-bands occupied by any two cells are different and they are not overlapped with each other, there is low interference between the cells, and the actual network planning is also simple and easily implemented. However, when the networking mode 1 is used, the bandwidth of the total available frequency band of the LTE system is N times the bandwidth of the sub-band desired for a single cell. As a result, the LTE system needs a large bandwidth, and the frequency utilization rate of the whole system is low.

Networking mode 2 is a mode in which the frequency reuse factor is 1. In this mode, the total available frequency band of the LTE system is regarded as a sub-band and can be occupied by each cell, i.e., an identical frequency band is occupied by each cell.

Fig.2 is a schematic view showing the networking of the LTE system when the frequency reuse factor N is 1. When the bandwidth occupied by the total available frequency band of the LTE system is 20 M, this bandwidth is shared by cells A, B and C.

When the networking mode 2 is used, the whole system has a high frequency utilization rate. However, an identical frequency band is occupied by the cells, thus co-channel interference between the cells is high. Especially, the interference on the cell edge users may be very serious, and as a result, the control channel of the cell edge users cannot function properly.

Thus it can be seen that, in the existing networking modes, there exist in the LTE system the problems of low frequency utilization rate or high co-channel interference between the cells. As a result, the overall performance of the system will be adversely affected.

A US patent application publication (US 2007/298807 A1) provides a method of frequency usage in a wireless telecommunications network having a plurality of wireless coverage areas. A PCT publication (WO 2005/079094 A1) provides a method of allocating radio resources for a TDMA cellular telecommunications system which applies spatial diversity and cell-specific radio frequency bands.

### SUMMARY OF THE INVENTION

An embodiment of the present invention provides a networking method and device for frequency reuse, so as to solve the problems of low frequency utilization rate and high co-channel interference between cells simultaneously.

A networking method for frequency reuse, in which a total available frequency band of a system is divided into a plurality of sub-bands, comprises allocating the divided sub-bands to each cell, wherein the sub-bands allocated to at least two cells are overlapped with each other, further, with respect to a neighboring cell with overlapped sub-bands, using a frequency band of a non-overlapped portion of the neighboring cell to schedule service when load of the neighboring cell is less than a load threshold; and using a frequency band of a non-overlapped portion in the sub-band allocated to any cell to schedule service in a higher priority than a frequency band of an overlapped portion when the load of the any cell is not less than the load threshold.

A networking device for frequency reuse comprises a division module which is configured to divide the total available frequency band of the system into a plurality of sub-bands in advance; and an allocation module which is configured to allocate the divided sub-bands to each cell, wherein the sub-bands allocated to at least two cells are overlapped with each other, a load determination module, configured to determine load of neighboring cells with respect to the neighboring cells with overlapped sub-bands; anda schedule module, when the load of the neighboring cells is less than a load threshold, configured to instruct the neighboring cells to use the frequency band of a non-overlapped portion to schedule service and, when the load of any cell is not less than the load threshold, configured to instruct the cell to use the frequency band of the non-overlapped portion in the sub-band allocated thereto to schedule service in a priority higher than the frequency band of an overlapped portion.

The present invention has the following beneficial effects.

In the embodiment of the present invention, the total available frequency band of the system is divided into a plurality of sub-bands, and the divided sub-bands are allocated to each cell while ensuring that the sub-bands allocated to at least two cells are overlapped with each other. Hence, as compared with the networking mode in which the sub-bands are orthogonal to each other and the frequency reuse factor is N in the prior art, the frequency utilization rate of the system is improved. Meanwhile, as compared with the networking mode in which the frequency reuse factor is 1 in the prior art, the co-channel interference between the cells is reduced.

### BRIEF DESCRIPTION OF THE DRAWINGS

In order to clearly illustrate the technical solutions of the present invention or the prior art, following are the figures required for the description of the present invention or the prior art. Obviously, these figures depict some embodiments of the present invention for the purpose of illustration only. One skilled in the art will readily obtain the other figures in accordance with these figures without any creative effort.
Fig.1 is a schematic view showing the networking of a system in the prior art when a frequency reuse factor N is 3;
Fig.2 is a schematic view showing the networking of a system in the prior art when a frequency reuse factor N is 1;
Fig.3 is a schematic view showing a networking method for frequency reuse according to the first embodiment of the present invention;
Figs.4-6 are schematic views showing three networking modes according to the first embodiment of the present invention;
Fig.7 is a schematic view showing the networking according to the first embodiment of the present invention;
Fig.8 is a schematic view showing the networking method for frequency reuse according to the second embodiment of the present invention;
Figs.9(a) and 9(b) are schematic views showing two networking modes according to the second embodiment of the present invention;
Figs.10-12 are schematic views showing three networking modes according to the second embodiment of the present invention;
Fig. 13 is a schematic view showing a mode 1 for reducing co-channel interference between PBCH/SS and PDSCH of neighboring cells according to the third embodiment of the present invention;
Figs.14(a), 14(b) and 14(c) are schematic views showing three networking modes according to the third embodiment of the present invention;
Fig.15 is a schematic view showing a mode 2 for reducing co-channel interference between PBCH/SS and PDSCH of neighboring cells according to the third embodiment of the present invention;
Fig.16 is a schematic view showing a mode 1 for reducing co-channel interference between PUCCH and PUSCH of neighboring cells according to the fourth embodiment of the present invention;
Figs.17(a), 17(b) and 17(c) are schematic views showing three networking modes according to the fourth embodiment of the present invention;
Fig.18 is a schematic view showing a mode 2 for reducing co-channel interference between PUCCH and PUSCH of neighboring cells according to the fourth embodiment of the present invention;
Fig.19 is a schematic view showing a method for reducing co-channel interference between neighboring cells according to the fifth embodiment of the present invention;
Fig.20 is a schematic view showing the networking and OI information of cells A and B according to the fifth embodiment of the present invention; and
Fig.21 is a schematic view showing a networking device for frequency reuse according to the fifth embodiment of the present invention.

### DETAILED DESCRIPTION OF THE PREFERRED EMBODIMENTS

In order to solve the problem in the prior art that the co-channel interference between cells cannot be reduced when making full use of a system frequency, the present invention provides a networking scheme for frequency reuse, in which a total available frequency band of a system is divided into a plurality of sub-bands, and the divided sub-bands are allocated to each cell while ensuring that the sub-bands allocated to at least two cells are overlapped with each other. As a result, as compared with a networking mode 1 in the prior art, the frequency utilization rate of the system is improved, and as compared with a networking mode 2 in the prior art, the co-channel interference between cells is reduced.

The networking modes for frequency reuse concerned in the embodiments of the present invention may also be called as networking modes for "Frequency Shifted Frequency Reuse (FSFR)". The embodiments of the present invention are described in details hereinafter in conjunction with the figures.

### First Embodiment

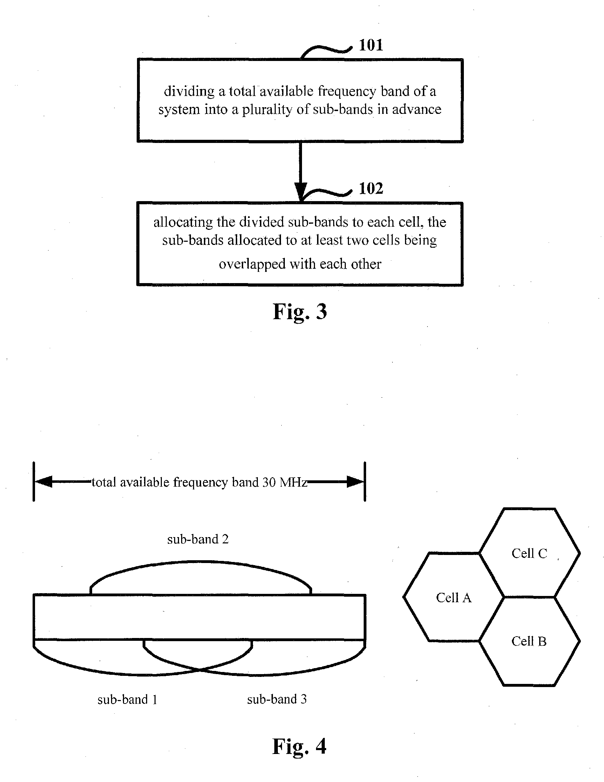

As shown in Fig.3, which is a schematic view showing a networking method for frequency reuse according to the first embodiment of the present invention, the method comprises the following steps:
Step 101: dividing a total available frequency band of a system into a plurality of sub-bands in advance.

In this step, the number of the divided sub-bands may be equal to a frequency reuse factor N. In the plurality of the divided sub-bands, at least two sub-bands are overlapped with each other, that is, at least two sub-bands does not intersect each other. In particular, there are two conditions:
Any sub-band is overlapped with the other sub-bands, or merely some of the sub-bands are overlapped with each other, and the rest of the sub-bands are not overlapped with the other sub-bands.

Two sub-bands being overlapped with each other in the first embodiment of the present invention may indicate that the bandwidths occupied by the two sub-bands are partially or fully overlapped with each other.

This step is a preprocessing step. Step 101 is executed only when there is a change to the system and the sub-bands need to be re-divided, but it is unnecessary for step 101 to be executed every time the networking is performed. Of course, the scheme in the first embodiment of the present invention may not be limited to the condition where step 101 is performed every time.

In this embodiment, the bandwidth occupied by each of the N sub-bands may be of an identical size, or different sizes.

Step 102: allocating the divided sub-bands to each cell, the allocated sub-bands of at least two cells being overlapped with each other.

In this step, the sub-bands may be divided in cells, or a set of a plurality of neighboring cells may be defined as a cell cluster and then the total available frequency band is divided into bandwidth subsets. Each bandwidth subset includes a plurality of sub-bands. When allocating the sub-bands to a cell, the plurality of sub-bands in a bandwidth subset may be allocated to a plurality of cells in the cell cluster.

In the scheme according to the first embodiment, there may be two allocation modes for allocating sub-bands to each cell.

The first allocation mode is that a sub-band is allocated to each cell.

As shown in Fig.4, when the total available frequency band is 30 MHz, the total available frequency band is divided into three sub-bands: sub-band 1, sub-band 2 and sub-band 3. The bandwidth occupied by each of the sub-bands is 20M, and any two sub-bands are partially overlapped with each other. At this time, sub-band 1 is allocated to cell A, sub-band 2 is allocated to cell B, and sub-band 3 is allocated to cell C. Cells A, B and C are neighboring cells with an identical site.

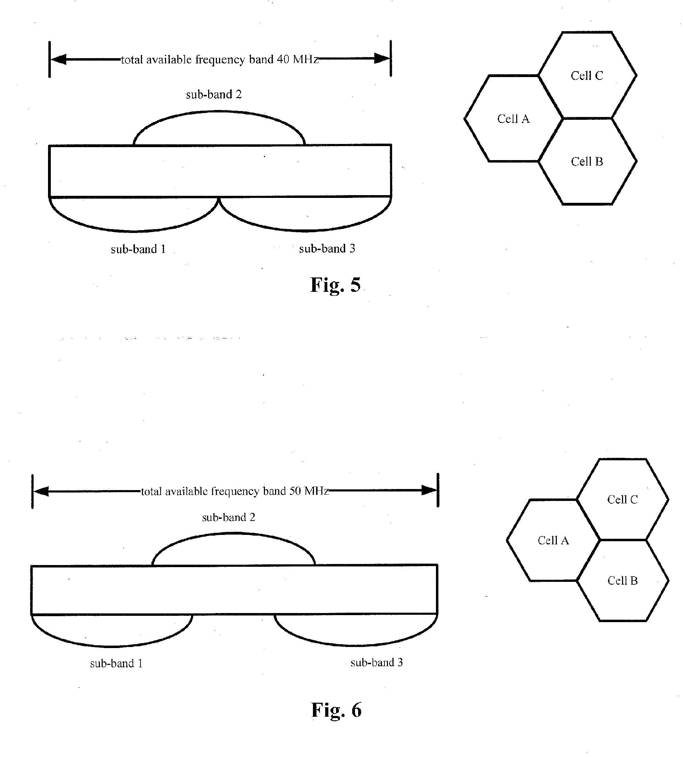

If the total available frequency band is 40 MHz or 50 MHz, the total available frequency band may be divided in a manner as shown in Figs.5 and 6, where the bandwidth occupied by each sub-band (sub-band 1, sub-band 2 and sub-band 3) is 20M, and any two sub-bands are partially overlapped with each other.

As can be seen from Figs.4-6, along with an increase in the total available frequency band, the overlap between any two sub-bands is decreased when the number of the divided sub-bands is the same. As a result, the system's ability to avoid interference is increased and the co-channel interference between the cells is reduced.

Apart from the situations as shown in Figs.4-6, the embodiment of the present invention may also be adapted to the other available frequency bands, e.g., a total available frequency band of 15MHz, 25MHz, 35MHz or 45MHz.

The second allocation mode is that a plurality of sub-bands is allocated to at least one cell.

In this mode, in order to minimize the interference between the resources allocated to an identical cell, it is required that any two of the plurality of sub-bands allocated to the same cell are not overlapped with each other, i.e., being orthogonal to each other.

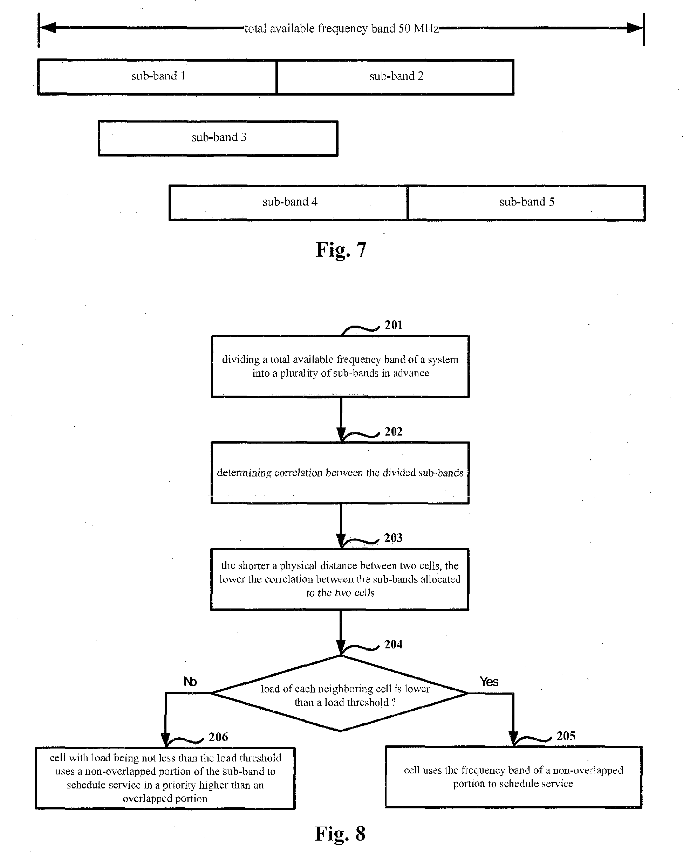

As shown in Fig.7, when the total available frequency band is 50 MHz, the total available frequency band is divided into five sub-bands: sub-band 1, sub-band 2, sub-band 3, sub-band 4 and sub-band 5, and the bandwidth occupied by each sub-band is 20 MHz. At this time, sub-bands 1 and 2 are allocated to cell A (sub-band 1 is orthogonal to sub-band 2), sub-band 3 is allocated to cell B, and sub-bands 4 and 5 are allocated to cell C (sub-band 4 is orthogonal to sub-band 5).

The first allocation mode may be applied to a single-carrier system, and the second allocation mode may be applied to a multi-carrier system, e.g., effectively applied to a LTE TDD system, a LTE FDD system, a LTE-A TDD system, a LTE-A FDD system, a WiMAX system and an IEEE802.16m system.

All the schemes concerned in the embodiments of the present invention can be applied to both a single-carrier system and a multi-carrier system.

The scheme according to the first embodiment of the present invention is specifically illustrated hereinafter in conjunction with the specific examples.

### Second Embodiment

The second embodiment is a detailed description of the first embodiment based thereon.

As shown in Fig.8, which is a schematic view showing a method according to the second embodiment of the present invention, the method comprises the following steps.

Step 201: dividing the total available frequency band of the system into a plurality of sub-bands in advance.

Step 202: determining correlation among the plurality of divided sub-bands.

In the scheme of this embodiment, the lower the correlation of the sub-bands, the lower the inference between the sub-bands, Hence, it needs to determine the correlation between the sub-bands before allocating the sub-bands to the cells, and then allocate the sub-band with low correlation to the cells with a short physical distance and allocate the sub-band with high correlation to the cells with a long physical distance, so as to minimize the co-channel interference between the cells with the short physical distance.

When determining the correlation between two sub-bands, the greater the proportion of the bandwidth of the overlap between the two sub-bands to the total bandwidth of the two sub-bands, the higher the correlation between the two sub-bands . To be specific, the bigger the quotient of the bandwidth of the overlap between the two sub-bands divided by the total bandwidth occupied by the two sub-bands, the higher the correlation between the two sub-bands.

When two sub-bands are not overlapped to each other (i.e., the sub-bands are orthogonal to each other), the quotient is 0, and at this time there is no correlation between the two sub-bands. When two sub-bands are partially overlapped to each other, the quotient is greater than 0 and less than 1; and when the two sub-bands are fully overlapped to each other, the quotient equals to 1.

Taking the divided sub-bands in Fig.4 as an example, the bandwidth occupied by the overlap between sub-band 1 and sub-band 2 is 10M, and the total bandwidth occupied by the overlap between sub-band 1 and sub-band 2 is 30M, thus the quotient of the bandwidth occupied by the overlap between sub-band 1 and sub-band 2 divided by the total bandwidth occupied by the two sub-bands is 1/3; the bandwidth occupied by the overlap between sub-band 1 and sub-band 3 is 15M, and the total bandwidth occupied by sub-band 1 and sub-band 3 is 30M, thus the quotient of the bandwidth occupied by the overlap between sub-band 1 and sub-band 3 divided by the total bandwidth occupied by the two sub-bands is 1/2. Therefore, the correlation between sub-band 1 and sub-band 2 is lower than that between sub-band 1 and sub-band 3.

Step 203: the shorter the physical distance between two cells, the lower the correlation between the sub-bands allocated to the two cells .

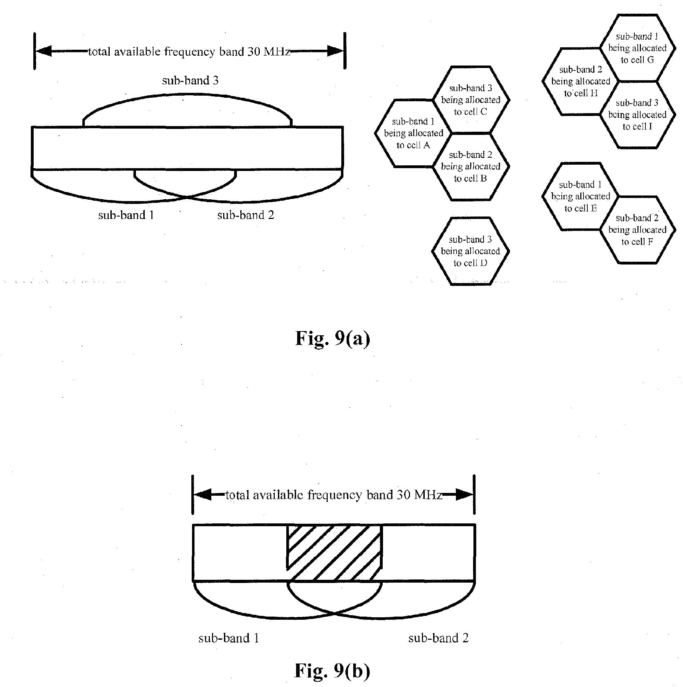

Still taking the divided sub-bands in Fig.4 as an example, as shown in Fig.9(a), an area is provided with four sites, which include three, one, three and two cells respectively. When sub-bands 1-3are to be allocated to cells A-C, sub-bands 1-3 may be randomly allocated to cells A-C, because cells A-C are neighboring cells and the physical distance between any two of the cells is equal.

As shown in Fig.9(a), when sub-bands 1-3 are to be allocated to cells A-D and sub-bands have been allocated to cells A-C, at this time, sub-band 1 or 3 may be allocated to cell D because:
On one hand, there is high correlation between sub-band 1 and sub-band 3, and sub-band 3 is allocated to cell C with the longest distance from cell D. Sub-band 1 may be allocated to cell D, but sub-band 1 has been allocated to cell A with the second longest distance from cell D, thus there will exist certain co-channel interference between sub-band 1 allocated to cell D and sub-band 1 allocated to cell A. On the other hand, when sub-band 3 is allocated to cell D, although there is high correlation between sub-band 2 and sub-band 3, the allocation of sub-band 3 to cell D may reduce the co-channel interference between cell D and cell C since cell D is farthest from cell C.

The allocation of sub-bands to cells E-I in Fig.9(a) is similar as that to cell D.

It should be noted that, the allocation of sub-bands to cells is illustrated in the embodiment of the present invention merely by taking the physical distance between the cells as an example, but the other methods for allocating sub-bands to cells may also be used.

Step 204: judging whether loads of the neighboring cells are lower than a load threshold with respect to the neighboring cells whose occupied sub-bands are overlapped with each other. If yes, it turns to step 205, and if not, it turns to step 206.

After the sub-bands are allocated to the cells, the use condition of sub-band resources may be configured for the cells according to the overlap between the sub-bands of the neighboring cells.

Taking the divided sub-bands in Fig.9(b) as an example, the total available frequency band is 30 MHz and it is divided into two sub-bands: sub-band 1 and sub-band 2. The bandwidth occupied by each sub-band is 20M, and there is an overlap of a bandwidth of 10M between sub-band 1 and sub-band 2 (the shaded portion in Fig.9(b)). Sub-band 1 is allocated to cell A and sub-band 2 is allocated to cell 2 adjacent to cell 1.

When executing this step, cell A will use the left 10M bandwidth resources of sub-band 1 in priority, and cell B will use the right 10M bandwidth resources of sub-band 2 in priority, i.e., both cells A and B will use the frequency bands not overlapped with each other in the sub-bands to schedule service. When cells A and B are of low load (i.e., less than the load threshold) and the non-overlapped 10M bandwidth of sub-band 1 or 2 is sufficient to carry the load of cell A or B respectively, cell A or B may merely use the non-overlapped portion of the respective sub-band, so as to reduce the co-channel interference between the cells.

When the load of cell A is increased to a value not less than the load threshold, cell A may use the whole sub-band 1. If at this time the load of cell B is less than the load threshold, cell B may continue to use the right 10M bandwidth of sub-band 2.

When cell A uses the whole sub-band 1, the priorities of the services to be scheduled in cell 1 are arranged in a descending order. The service with a high priority is scheduled in the non-overlapped portion of sub-band 1, and the service with a low priority is scheduled in the overlapped portion of sub-band 1, so as to enable the service with a high priority to be transmitted on the resources with low co-channel interference and to ensure proper execution of the services with a high priority.

Step 205: using the frequency band in non-overlapped portion to schedule the service, and then ending the process.

Step 206: with respect to the cell with a load not less than the load threshold, scheduling the service using the frequency band in the non-overlapped portion of the allocated sub-band in a priority higher than using the frequency band in the overlapped portion, and then ending the process.

According to the scheme of the second embodiment, a large frequency reuse factor may be used while a small total available frequency band, thereby the frequency utilization rate of the system is increased. Meanwhile, based on the correlation between the sub-bands, the sub-bands are allocated to the cells on the principle that the sub-bands with higher correction are allocated to the cells with the longest physical distance, and as a result the co-channel interference between the cells is minimized. When networking after proper allocation of the sub-bands to the cells, it is required that the cell of low load uses the resources in the sub-band not overlapped with the sub-band of the neighboring cell, so as to further reduce the co-channel interference between the cells. It is also required that the cell of high load preferentially uses the resources in the sub-band not overlapped with the sub-band of the neighboring cell to schedule the service with a high priority, and uses the resources in the sub-band overlapped with the sub-band of other neighboring cell to schedule the service with a low priority, so as to enable the service with a high priority to be transmitted on the resources with low co-channel interference and to ensure proper execution of the service with a high priority. The division of the sub-bands and the allocation of the sub-bands to the cells in this embodiment are predictable, the network will not change dynamically, and the scheduling algorithm is easily implemented.

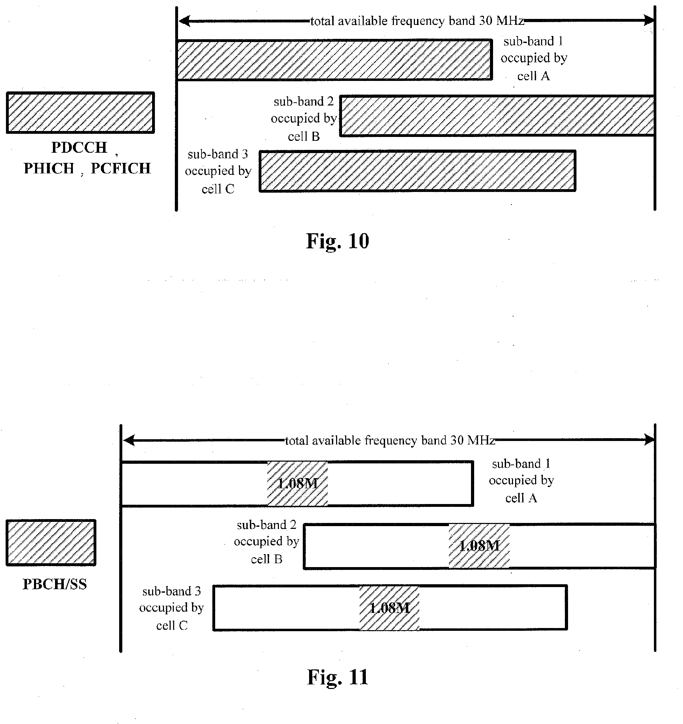

The beneficial effects of the first and second embodiments of the present invention are described hereinafter based on Figs.10-12, which are merely illustrative but not definitive to the schemes of the first and second embodiments.

The assumed total available frequency band in Figs. 10-12 is 30 MHz. It is divided into three sub-bands, and the bandwidth occupied by each sub-band is 20M. Sub-band 1 is allocated to cell A, sub-band 2 is allocated to cell B, and sub-band 3 is allocated to cell C. Cells A, B and C are neighboring cells of an identical site.

In Fig.10, the whole sub-bands of the cells are occupied by PDCCH, PHICH, or PCFICH. As can be seen from Fig.10, the sub-bands occupied by PDCCH in cells A, B and C are not fully overlapped with each other (i.e., the sub-bands are partially orthogonal to each other). As a result, if using the networking mode according to the embodiments of the present invention, the co-channel interference between cells on PDCCH is lower than that in the networking mode 2 as shown in Fig.2. The occupation situations for PHICH and PCFICH in the sub-bands are identical to that for PDCCH, therefore the description thereof is omitted.

In Fig.11, the intermediate portion of the sub-band allocated to each cell, with a bandwidth of 1.08 MHz, is occupied by PBCH and SS, and the frequency band other than that occupied by PBCH and SS of 1.08 MHz in the sub band is occupied by PDSCH. As can be seen from Fig.11, the frequency bands occupied by PBCH and SS of the neighboring cells A, B and C are orthogonal to each other. Since the frequency band other than 1.08 MHz is occupied by PDSCH, PDSCH is rarely used for the transmission of information when the cells are of low load. As a result, there is low co-channel interference on PBCH and SS of the neighboring cells A, B and C.

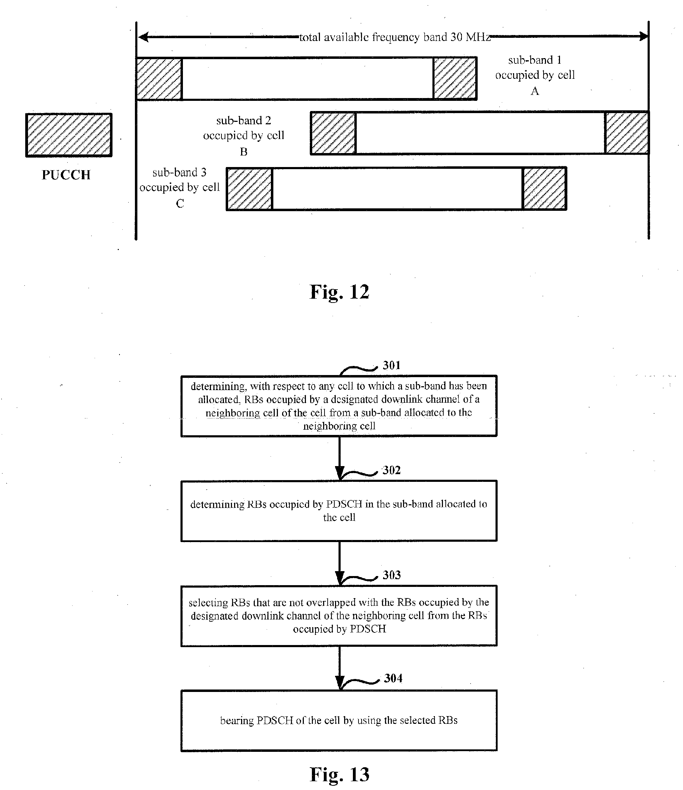

In Figs. 10 and 11, the beneficial effects of the present invention are illustrated by taking a downlink channel as an example, while in Fig.12, the beneficial effects are illustrated by taking an uplink channel as an example.

In Fig.12, the frequency band at both ends of the whole sub-band of the cell is occupied by PUCCH, and the frequency band other than that occupied by PUCCH is occupied by PUSCH. As can be seen from Fig.12, since the frequency bands occupied by PUCCH of the neighboring cells A, B and C are orthogonal to each other, PUSCH is rarely used for the transmission of information when the cells are of low load. As a result, there is low co-channel interference between cells on PUCCH of each cell.

Under the situation as shown in Fig.1 1, PBCH/SS and PDSCH of the neighboring cells are fully overlapped with each other (i.e., they are in the same frequency band). When the cells are of low load, PDSCH is rarely used for the transmission of information, and there is low co-channel interference on PBCH/SS. However, when the cells are of high load, and PBCH/SS and PDSCH of the neighboring cells are in the same frequency band and are used to transmit information simultaneously, the co-channel interference will appear between PBCH/SS and PDSCH of the neighboring cells, and even the performance of PBCH/SS will be affected seriously.

Under the situation as shown in Fig.12, PUCCH and PUSCH of the neighboring cells are fully overlapped with each other (i.e., they are in the same frequency band). When the cells are of low load, PUSCH is rarely used for the transmission of information, and there is low co-channel interference on PUCCH. However, when the cells are of high load, and PUCCH and PUSCH of the neighboring cells are in the same frequency band and are used to transmit information simultaneously, the co-channel interference will appear between PUCCH and PUSCH of the neighboring cells, and even the performance of PUCCH will be affected seriously.

Therefore, a networking optimization scheme for a downlink channel and a networking optimization scheme for an uplink channel are provided in the third and fourth embodiments of the present invention respectively, so as to resolve the problem of the co-channel interference between PBCH/SS and PDSCH, or between PUCCH and PUSCH, of the neighboring cells.

### Third Embodiment

The method for reducing co-channel interference between PBCH/SS and PDSCH of the neighboring cells according to the third embodiment of the present invention includes, but not limited to, the following two modes, which will be described hereinafter respectively.

As shown in Fig.13, a mode 1 for reducing co-channel interference between PBCH/SS and PDSCH of the neighboring cells comprises the following steps.

Step 301: determining, with respect to any cell to which a sub-band has been allocated, RBs occupied by a designated downlink channel of a neighboring cell of the cell from the sub-band allocated to the neighboring cell.

The designated downlink channel in this embodiment may include PBCH and/or SS, or any other downlink channels.

Generally, PBCH/SS are located at the center of the sub-band, thus in this step, according to the center frequency of the neighboring cell and the bandwidth of the sub-band allocated to the neighboring cell, the RBs occupied by the frequency band with a center set length in the sub-band allocated to the neighboring cell may serve as the RBs occupied by the designated downlink channel of the neighboring cell. The frequency band with the set length may be a frequency band having a center frequency of 1.08 MHz, i.e., a frequency band having 0.54 MHz at either side of the center point of the sub-band.

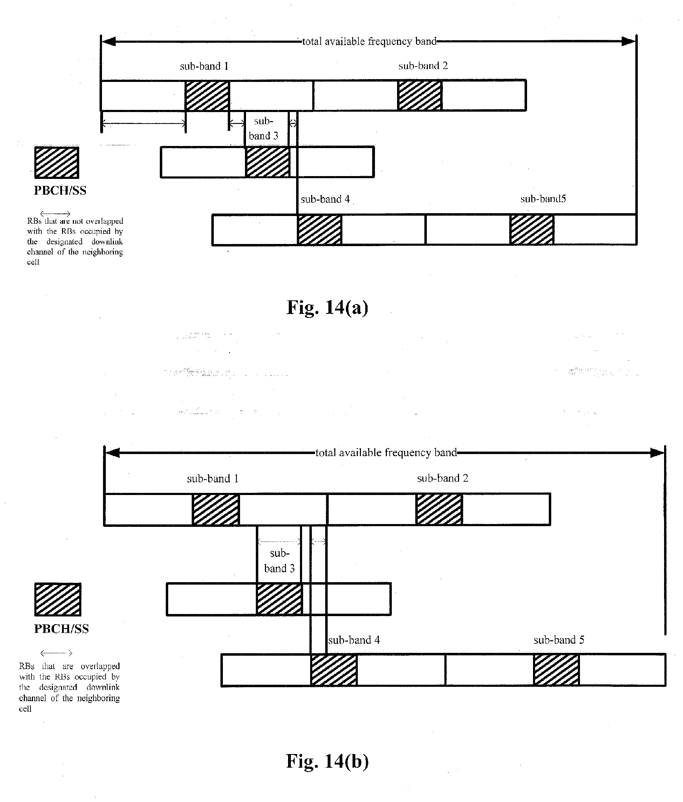

Assuming as shown in Fig.14(a), the total available frequency band is divided into five sub-bands, in which sub-bands 1 and 2 are allocated to cell A, sub-band 3 is allocated to cell B, and sub-bands 4 and 5 are allocated to cell C. Cells A, B and C are neighboring cells of an identical site. With respect to cell A, the Resource Blocks (RBs) occupied by the designated downlink channel in sub-band 3 allocated to cell B and the RBs occupied by the designated downlink channel in sub-bands 4 and 5 allocated to cell C are determined.

Step 302: determining the RBs occupied by PDSCH in the sub-band allocated to the cell.

In Fig. 14(a), the condition where a plurality of sub-bands are allocated to at least one cell is taken as an example. In the scheme of this embodiment, two sub-bands are allocated to cell A, wherein the steps as shown in Fig.13 are executed for both sub-bands 1 and 2, so as to reduce the co-channel interference between sub-band 1 or 2 and the other sub-bands.

Taking sub-band 1 as an example, in this step, the RBs in sub-band 1 other than the shaded portion in Fig.14(a) are determined as the RBs occupied by PDSCH.

Step 303: selecting, from the RBs occupied by PDSCH, the RBs that are not overlapped with the RBs occupied by the designated downlink channel of the neighboring cell (i.e., the RBs that are orthogonal to the designated downlink channel of the neighboring cell).

Taking sub-band 1 in Fig.14(a) as an example, it needs to select from the RBs occupied by PDSCH of sub-band 1 the RBs that are orthogonal to PBCH/SS of sub-bands 3, 4 and 5. Because sub-band 1 is fully overlapped with sub-band 5, this step is actually to select from the RBs occupied by PDSCH of sub-band 1 the RBs that are orthogonal to PBCH/SS of sub-bands 3 and 4, i.e., a portion of the frequency band in sub-band 1 marked in Fig.14(a).

Step 304: carrying PDSCH of the cell using the selected RBs.

When cell A uses PDSCH of sub-band 1 to transmit information, PDSCH of cell A is borne by the selected RBs in priority, so as to minimize the co-channel interference between PDSCH of sub-band 1 and PBCH/SS of sub-bands 3, 5 when PDSCH of sub-band 1 and sub-bands 3, 5 are used to transmit information simultaneously.

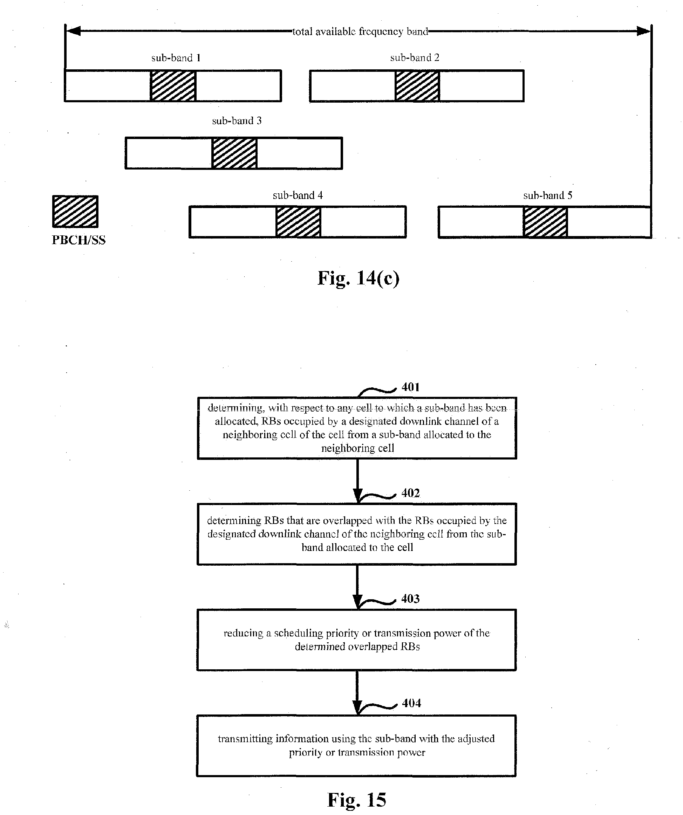

As shown in Fig.15, a mode 2 for reducing co-channel interference between PBCH/SS and PDSCH of neighboring cells comprises the following steps.

Step 401: determining, with respect to any cell to which a sub-band has been allocated, RBs occupied by a designated downlink channel of a neighboring cell of the cell from the sub-band allocated to the neighboring cell.

Taking Fig.14(b) as an example (the division and allocation of the sub-bands in Fig.14(b) are identical to those in Fig.14(a)), with respect to cell A, the RBs occupied by the designated downlink channel in sub-band 3 allocated to cell B and the RBs occupied by the designated downlink channel in sub-bands 4, 5 allocated to cell C are determined.

Step 402: determining the RBs that are overlapped with the RBs occupied by the designated downlink channel of the neighboring cell from the sub-band allocated to the cell.

In Fig.14(b), the RBs in sub-band 1 that are overlapped with the RBs occupied by PBCH/SS of sub-bands 3, 5, i.e., the portion marked in Fig.14(b), are determined.

Step 403: reducing a scheduling priority or transmission power of the determined overlapped RBs.

In this step, when the overlapped RBs determined in sub-band 1 are used to carry a channel to transmit information, there will exist co-channel interference between the channel and PBCH/SS in sub-bands 3, 5. As a result, in order to reduce the co-channel interference, the scheduling priority of the overlapped RBs determined in sub-band 1 is reduced to be less than a scheduling priority of the other RBs in sub-band 1, or the transmission power of the overlapped RBs determined in sub-band 1 is reduced to less than the transmission power of the other RBs in sub-band 1. Extremely, the transmission power of the overlapped RBs determined in sub-band 1 may be reduced to 0, i.e., the RBs are not used for the transmission of information.

Step 404: transmitting information using the sub-band with the adjusted priority or transmission power.

When cell A uses PDSCH of sub-band 1 to transmit information, the RBs that are orthogonal to PBCH/SS of sub-bands 3, 5 are used in priority, so as to minimize the co-channel interference between PDSCH of sub-band 1 and PBCH/SS of sub-bands 3, 5.

With respect to any cell, continuous frequency band allocation is used in Figs.14(a) and 14(b), i.e., the two frequency bands occupied by a plurality of sub-bands allocated to an identical cell are continuous ones. Its advantage is that the occupied total available frequency band is small. If it is to further reduce the co-channel interference, the scheme according to the third embodiment of the present invention may also use the discontinuous frequency band allocation as shown in Fig.14(c).

The two modes for reducing co-channel interference according to the third embodiment of the present invention both aim to offset the RBs occupied by PDSCH of a cell and the RBs occupied by PBCH/SS of a neighboring cell in frequency with respect to each other, so as to minimize the interference between PDSCH of the cell and PBCH/SS of the neighboring cell.

### Fourth Embodiment

The method for reducing co-channel interference between PUCCH and PUSCH of the neighboring cells according to the fourth embodiment of the present invention includes, but not limited to, the following two modes, which will be described hereinafter respectively.

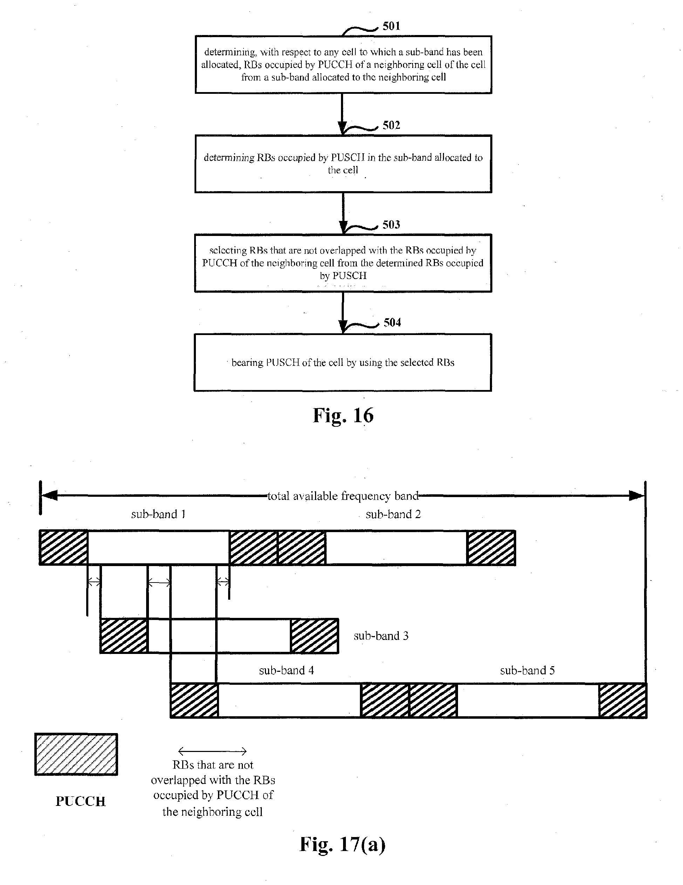

As shown in Fig.16, the mode 1 for reducing co-channel interference between PUCCH and PUSCH of the neighboring cells comprises the following steps.

Step 501: determining, with respect to any cell to which a sub-band has been allocated, RBs occupied by PUCCH of a neighboring cell of the cell from the sub-band allocated to the neighboring cell.

Generally, PUCCH is allocated at both ends of the sub-band, thus in this step, the RBs occupied by PUCCH of the neighboring cell may be determined according to a center frequency of the neighboring cell and the bandwidth of the sub-band allocated to the neighboring cell.

To be specific, the neighboring cells notify each other the respective number M of PUCCH RBs via an interface X2 or S1 in a static, semi-static or dynamic manner. With respect to a certain cell, the RBs at the ends of the sub-band allocated to the neighboring cell is determined according to the center frequency of the neighboring cell and the bandwidth of the sub-band allocated to the neighboring cell, and then M/2 RBs at the ends of the sub-band allocated to the neighboring cell are used as the RBs occupied by PUCCH of the neighboring cell.

Assuming as shown in Fig.17(a), the total available frequency band is divided into five sub-bands, in which sub-bands 1, 2 are allocated to cell A, sub-band 3 is allocated to cell B, and sub-bands 4, 5 are allocated to cell C. Cells A, B and C are neighboring cells with an identical site. With respect to cell A, the RBs occupied by PUCCH in sub-band 3 allocated to cell B and the RBs occupied by PUCCH in sub-bands 4, 5 allocated to cell C are determined.

Step 502: determining the RBs occupied by PUSCH in the sub-band allocated to the cell.

In this step, the RBs occupied by PUSCH in sub-band 1 in Fig.17(a) are to be determined.

Step 503: selecting from the determined RBs occupied by PUSCH the RBs that are not overlapped with the RBs occupied by PUCCH of the neighboring cell.

Taking sub-band 1 in Fig.17(a) as an example, it needs to select from the RBs occupied by PUSCH of sub-band 1 the RBs that are orthogonal to PUCCH of sub-bands 3, 4, i.e., the portion of frequency band in sub-band 1 marked in Fig.17(a).

Step 504: carrying PUSCH of the cell with the selected RBs.

When cell A uses PUSCH of sub-band 1 to transmit information, the selected RBs are used in priority to carry PUSCH of cell A, so as to minimize the co-channel interference between PUSCH of sub-band 1 and PUCCH of sub-bands 3, 5 when PUSCH of sub-band 1 and sub-bands 3, 5 are used to transmit information simultaneously.

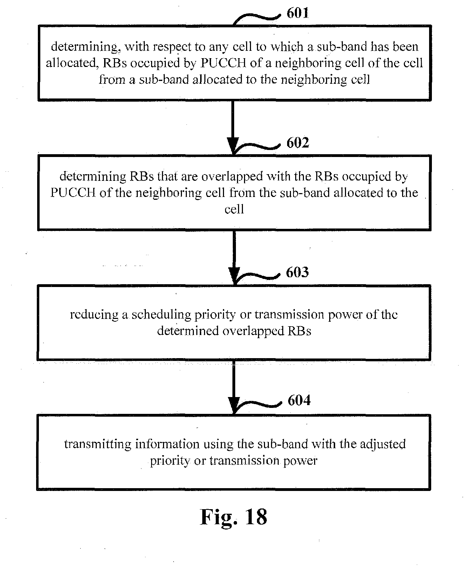

As shown in Fig.18, the mode 2 for reducing the co-channel interference between PUCCH and PUSCH of the neighboring cells comprises the following steps.

Step 601: determining, with respect to any cell to which a sub-band has been allocated, RBs occupied by PUCCH of a neighboring cell of the cell from the sub-band allocated to the neighboring cell.

This step is identical to step 501.

Step 602: determining RBs that are overlapped with the RBs occupied by PUCCH of the neighboring cell from the sub-band allocated to the cell.

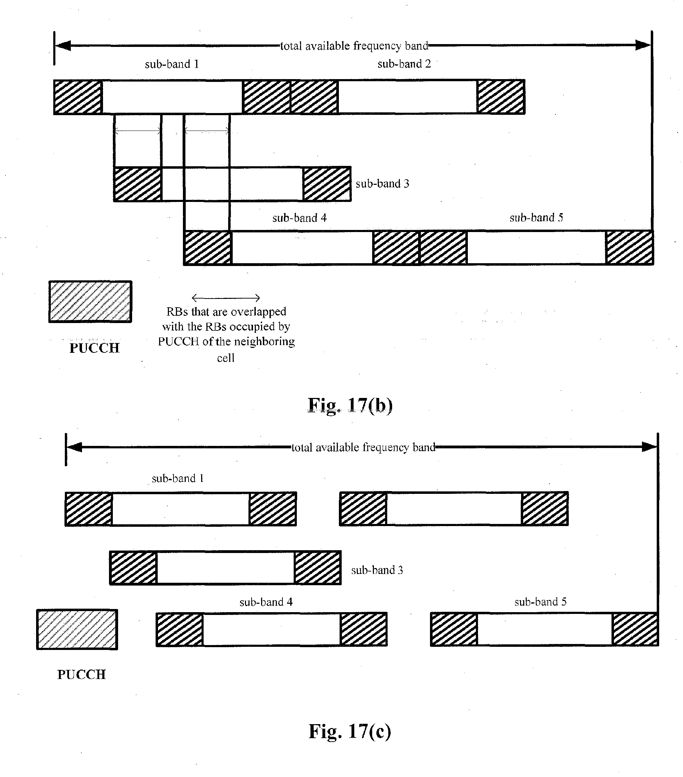

Taking Fig.17(b) as an example (the division and allocation of the sub-bands in Fig.17(b) are identical to those in Fig.17(a)), in this step, the RBs in sub-band 1 that are overlapped with the RBs occupied by PUCCH of sub-bands 3, 5, i.e., the portion marked in Fig.17(b), are determined.

Step 603: reducing a scheduling priority or transmission power of the determined overlapped RBs.

In this step, when the overlapped RBs determined in sub-band 1 are used to carry a channel to transmit information, there will exist co-channel interference between the channel and PUCCH in sub-bands 3, 5. As a result, in order to reduce the co-channel interference, the scheduling priority of the overlapped RBs determined in sub-band 1 is reduced to be less than a scheduling priority of the other RBs in sub-band 1, or the transmission power of the overlapped RBs determined in sub-band 1 is reduced to less than the transmission power of the other RBs in sub-band 1. Extremely, the transmission power of the overlapped RBs determined in sub-band 1 may be reduced to 0, i.e., the RBs are not used for the transmission of information.

Step 604: transmitting information using the sub-band with the adjusted priority or transmission power.

When cell A uses PDSCH of sub-band 1 to transmit information, the RBs that are orthogonal to PUCCH of sub-bands 3, 5 are used in priority, so as to minimize the co-channel interference between PUSCH of sub-band 1 and PUCCH of sub-bands 3, 5.

With respect to any cell, continuous frequency band allocation is used in Figs. 17(a) and 17(b). The scheme according to the fourth embodiment of the present invention may also use the discontinuous frequency band allocation as shown in Fig.17(c).

### Fifth Embodiment

The third embodiment provides an optimization scheme for reducing interference between the downlink channels, the fourth embodiment provides an optimization scheme for reducing interference between the uplink channels, and the fifth embodiment further provides a scheme for reducing interference capable of being applied to the uplink channels and the downlink channels simultaneously.

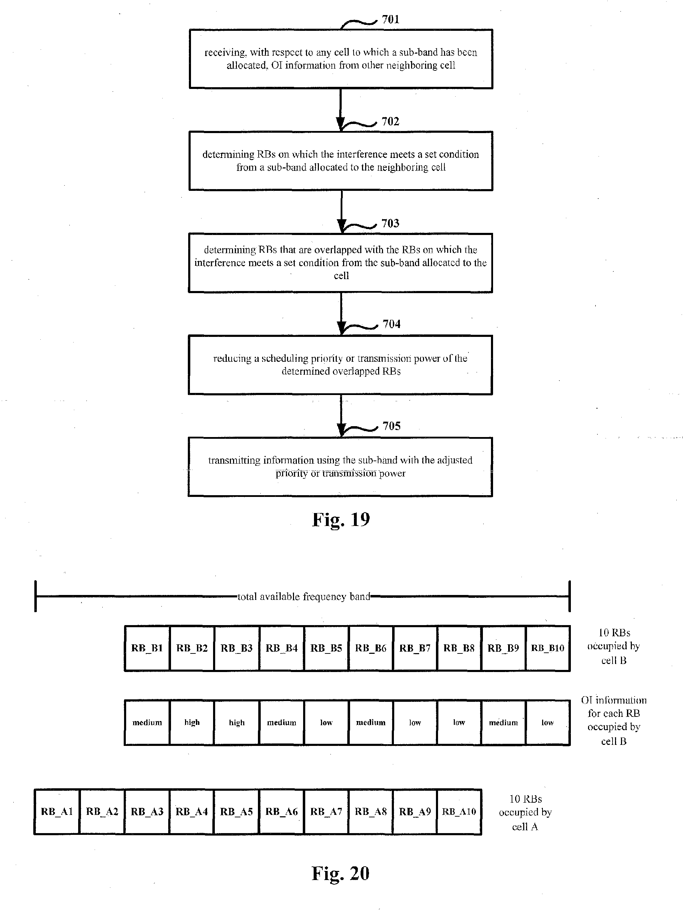

As shown in Fig.19, the method for reducing co-channel interference between the neighboring cells according to the fifth embodiment of the present invention comprises the following steps.

Step 701: receiving, with respect to any cell to which a sub-band has been allocated, overload indicator (OI) information transmitted by other neighboring cells.

The OI information for each RB has two bits to indicate the size of interference, e.g., high, medium or low interference, on the RB. After the OI information for each RB of the sub-band allocated to each cell is determined, it is transmitted to a neighboring cell or cells.

Step 702: determining the RBs in the sub-band allocated to the neighboring cell on which the interference meets a set condition.

It is assumed that the OI information of cell B received by cell A is shown in Fig.20. The OI information includes the size of interference on 10 RBs in the sub-band allocated to cell B. When the set condition is high interference on the RBs, in the OI information received by cell A in this step, there is high interference on RB B2 and RB B3.

Step 703: determining the RBs that are overlapped with the RBs on which the interference meets the set condition from the sub-band allocated to the cell.

Based on the sub-band allocated to itself, cell A determines the RBs that are overlapped with RB_B2 and RB_B3 as RB_A4 and RB_A5.

Step 704: reducing a scheduling priority or transmission power of the determined overlapped RBs.

In this step, the RBs in the sub-band of cell A are overlapped with the RBs in cell B which are affected by high interference, thus there is serious co-channel interference between cells A and B. As a result, the scheduling priority of the overlapped RBs in the sub-band allocated to cell A is reduced to less than the scheduling priority of the other RBs in the sub-band allocated to the cell, or the transmission power of the determined overlapped RBs is reduced to less than the transmission power of the other RBs in the sub-band allocated to the cell.

Step 705: transmitting information using the sub-band with the adjusted priority or transmission power.

It is to be noted that, the RB concerned in the third, fourth and fifth embodiments of the present invention includes 14 OFDM symbols. In any mode for reducing the co-channel interference, the RB determined in each step may be a portion including less than 14 OFDM symbols, but not be a complete RB. Therefore, when the determined RB is a portion including less than 14 OFDM symbols, the remaining OFDM symbols may be filled into the determined portion of RB to obtain a complete RB.

For example, in step 402, one of the RBs determined in sub-band 1 and overlapped with the RBs occupied by PBCH/SS of sub-bands 3, 5 has 10 OFDM symbols overlapped with the RBs occupied by PBCH/SS, and the remaining 4 OFDM symbols not overlapped with the RBs occupied by PBCH/SS of sub-bands 3, 5. RB is the smallest unit for channel transmission, thus the non-overlapped 4 OFDM symbols and the overlapped 10 OFDM symbols may be used together as the RB that is overlapped with the RB occupied by PBCH/SS of sub-bands 3, 5.

### Sixth Embodiment

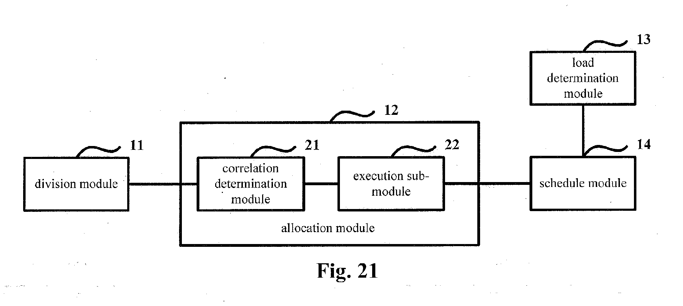

The sixth embodiment of the present invention provides a networking device for frequency reuse. As shown in Fig.21, the device comprises a division module 11 for dividing a total available frequency band of a system into a plurality of sub-bands in advance, and an allocation module 12 for allocating the divided sub-bands to each cell, wherein the sub-bands allocated to at least two cells are overlapped with each other.

The allocation module 12 is specifically used for allocating a sub-band to each cell, or for allocating a plurality of sub-bands to at least one cell. Any two of the plurality of sub-bands allocated to an identical cell are not overlapped to each other.

To be specific, the allocation module 12 comprises a correlation determination sub-module 21 and an execution sub-module 22. The correlation determination sub-module 21 is used for determining correlation between the sub-bands. The greater the proportion of the bandwidth of the overlap between any two sub-bands to the total bandwidth of the two sub-bands, the higher the correlation of the two sub-bands. The execution sub-module 22 is used for allocating the divided sub-bands to each cell according to the correlation between the sub-bands. The shorter the physical distance between two cells, the lower the correlation between the sub-bands allocated to the two cells.

The device further comprises a load determination module 13 for determining the load of neighboring cells with respect to the neighboring cells with overlapped sub-bands being occupied, and a schedule module 14 for, when the load of the neighboring cells is less than a load threshold, instructing the neighboring cells to use the frequency band of a non-overlapped portion to schedule service and, when the load of any cell is not less than the load threshold, instructing the cell to use the frequency band of the non-overlapped portion in the sub-band allocated thereto to schedule service in a priority higher than the frequency band of the overlapped portion.

Apart from the structure as shown in Fig.21, the device according to the sixth embodiment of the present invention further comprises the functional modules for implementing the third to the fifth embodiments, which are described hereinafter.

1. With respect to the mode 1 for reducing the co-channel interference between PUCCH and PUSCH of the neighboring cells as shown in Fig.16 of the fourth embodiment, the device of the sixth embodiment comprises the following functional modules: a neighboring cell RB determination module, a RB selection module and an instruction module.

The neighboring cell RB determination module is used to determine, with respect to any cell to which a sub-band has been allocated, RBs occupied by PUCCH of a neighboring cell of the cell from the sub-band allocated to the neighboring cell.

The RB selection module is used to determine RBs occupied by PUSCH in the sub-band allocated to the cell and select the RBs that are not overlapped with the RBs occupied by PUCCH from the RBs occupied by PUSCH.

The instruction module is used to instruct the cell to carry PUSCH with the selected RBs.

2. With respect to the mode 2 for reducing co-channel interference between PUCCH and PUSCH of the neighboring cells as shown in Fig.18 of the fourth embodiment, the device of the sixth embodiment comprises the following functional modules: a neighboring cell RB determination module, a RB selection module and an adjustment module.

The neighboring cell RB determination module is used to determine, with respect to any cell to which a sub-band has been allocated, RBs occupied by PUCCH of a neighboring cell of the cell from the sub-band allocated to the neighboring cell.

The RB selection module is used to determine the RBs that are overlapped with RBs occupied by PUCCH of the neighboring cell from the sub-band allocated to the cell.

The adjustment module is used for reducing a scheduling priority of the determined overlapped RBs to less than a scheduling priority of the other RBs in the sub-band allocated to the cell, or reducing transmission power of the determined overlapped RBs to less than transmission power of the other RBs in the sub-band allocated to the cell.

The neighboring cell RB determination module in the above items 1 and 2 are specifically used for determining the RBs at both ends of the sub-band allocated to the neighboring cell according to a center frequency of the neighboring cell and a bandwidth of the sub-band allocated to the neighboring cell, and determining M/2 RBs at both ends of the sub-band allocated to the neighboring cell as the RBs occupied by PUCCH of the neighboring cell. M is the number of RBs occupied by PUCCH of the neighboring cell.

3. With respect to the mode for reducing co-channel interference between the neighboring cells as shown in Fig.19 of the fifth embodiment, the device of the sixth embodiment comprises the following functional modules: an information reception module, a neighboring cell RB determination module, a RB selection module and an adjustment module.

The information reception module is used for receiving OI information transmitted between the neighboring cells with respect to any cell to which a sub-band has been allocated. The OI information includes the magnitude of the interference on the RBs in the sub-bands allocated to the neighboring cells.

The neighboring cell RB determination module is used for determining the RBs on which the interference meets a set condition from the sub-bands allocated to the neighboring cells.

The RB selection module is used for determining the RBs that are overlapped with the RBs on which the interference meets the set condition from the sub-band allocated to the cell.

The adjusting module is used for reducing a scheduling priority of the determined overlapped RBs to less than a scheduling priority of the other RBs in the sub-bands allocated to the cell, or reducing transmission power of the determined overlapped RBs to less than transmission power of the other RBs in the sub-band allocated to the cell.

4. With respect to the mode 1 for reducing co-channel interference between PBCH/SS and PDSCH of the neighboring cells as shown in Fig. 13 of the third embodiment, the device of the sixth embodiment comprises the following functional modules: a neighboring cell RB determination module, a RB selection module and an instruction module.

The neighboring cell RB determination module is used for determining, with respect to any cell to which a sub-band has been allocated, RBs occupied by a designated downlink channel of a neighboring cell of the cell from the sub-band allocated to the neighboring cell.

The RB selection module is used for determining RBs occupied by PDSCH from the sub-bands allocated to the cell and selecting the RBs that are not overlapped with the RBs occupied by the designated downlink channel from the RBs occupied by PDSCH.

The instruction module is used for instructing the cell to carry PDSCH with the selected RBs.

5. With respect to the mode 2 for reducing co-channel interference between PBCH/SS and PDSCH of the neighboring cells as shown in Fig. 15 of the third embodiment, the device of the sixth embodiment comprises the following functional modules: a neighboring cell RB determination module, a RB selection module and an adjustment module.

The neighboring cell RB determination module is used for determining, with respect to any cell to which a sub-band has been allocated, RBs occupied by a designated downlink channel of a neighboring cell of the cell from the sub-band allocated to the neighboring cell.

The RB selection module is used for determining RBs that are overlapped with the RBs occupied by the designated downlink channel of the neighboring cell from the sub-band allocated to the cell.

The adjustment module is used for reducing a scheduling priority of the determined overlapped RBs to less than a scheduling priority of the other RBs in the sub-band allocated to the cell, or reducing transmission power of the determined overlapped RBs to less than transmission power of the other RBs in the sub-band allocated to the cell.

The neighboring cell RB determination module in the above items 4 and 5 is specifically used for determining the RBs occupied by the frequency band with a center set length in the sub-band allocated to the neighboring cell as the RBs occupied by the designated downlink channel of the neighboring cell according to a center frequency of the neighboring cell and a bandwidth of the sub-band allocated to the neighboring cell. The frequency band with the set length may be a frequency band of 1.08 MHz.

Based on the descriptions, a person skilled in the art can clearly understand that the present invention can be implemented by means of software as well as a necessary common hardware platform, or by means of hardware. However, in many situations, the former is preferred. Based on this concept, the technical solution of the present invention, or the portion thereof contributing to the prior art, can be realized as a software product. The software product is stored in a storage medium and includes instructions so as to enable a terminal (which may be a mobile phone, a personal computer, a server or a network device) to execute the methods described in the embodiments of the present invention.

The above are merely the preferred embodiments of the present invention. It should be noted that, any improvements and modifications may be made by a person skilled in the art without departing from the principle of the present invention. These improvements and modifications shall also be considered as falling in the scope of the present invention.

## Claims

1. A networking method for frequency reuse, wherein a total available frequency band of a system is divided into a plurality of sub-bands (101),
the networking method for frequency reuse comprises:
allocating the divided sub-bands to each cell, wherein the sub-bands allocated to at least two cells are overlapped with each other (102),
**characterized by** further comprising, with respect to a neighboring cell with overlapped sub-bands, using a frequency band of a non-overlapped portion of the neighboring cell to schedule service when load of the neighboring cell is less than a load threshold; and
using a frequency band of a non-overlapped portion in the sub-band allocated to any cell to schedule service in a higher priority than a frequency band of an overlapped portion used to schedule service in a lower priority, when the load of the any cell is not less than the load threshold.

2. The method according to claim 1, wherein the allocating the divided sub-bands to each cell comprises:
allocating the divided sub-bands to each cell according to correlation between the sub-bands,
wherein the greater the proportion of a bandwidth of an overlap between any two sub-bands to a total bandwidth of the two sub-bands, the higher the correlation between the two sub-bands,
wherein the allocating the divided sub-bands to each cell according to correlation between the sub-bands comprises:
allocating the divided sub-bands to each cell based on a principle that the shorter a physical distance between two cells, the lower the correlation between the sub-bands allocated to the two cells.

3. The method according to claim 1, wherein, after allocating the divided sub-bands to each cell, the method further comprises:
determining, with respect to any cell to which a sub-band has been allocated, Resource Blocks RBs occupied by Physical Uplink Control CHannel PUCCH of a neighboring cell of the cell from a sub-band allocated to the neighboring cell (501); and
determining RBs occupied by Physical Uplink Shared CHannel PUSCH from the sub-band allocated to the cell (502), selecting RBs that are not overlapped with the RBs occupied by the PUCCH from the RBs occupied by the PUSCH (503), and carrying the PUSCH of the cell by using the selected RBs (504).

4. The method according to claim 1, wherein, after allocating the divided sub-bands to each cell, the method further comprises:
determining, with respect to any cell to which a sub-band has been allocated, RBs occupied by PUCCH of a neighboring cell of the cell from a sub-band allocated to the neighboring cell (601);
determining RBs that are overlapped with the RBs occupied by PUCCH of the neighboring cell from the sub-band allocated to the cell (602); and
reducing a scheduling priority of the determined overlapped RBs to be lower than a scheduling priority of the other RBs in the sub-band allocated to the cell, or reducing transmission power of the determined overlapped RBs to be lower than transmission power of the other RBs in the sub-band allocated to the cell (603).

5. The method according to claim 3 or 4, wherein the determining RBs occupied by PUCCH of a neighboring cell comprises:
determining the RBs occupied by PUCCH of the neighboring cell according to a center frequency of the neighboring cell and a bandwidth of the sub-band allocated to the neighboring cell,
wherein the determining RBs occupied by PUCCH of a neighboring cell comprises:
determining the RBs at both ends of a sub-band allocated to the neighboring cell according to a center frequency of the neighboring cell and a bandwidth of the sub-band allocated to the neighboring cell; and
using M/2 RBs at both ends of the sub-band allocated to the neighboring cell as the RBs occupied by PUCCH of the neighboring cell, wherein M is the number of RBs occupied by PUCCH of the neighboring cell.

6. The method according to claim 1, wherein, after allocating the divided sub-bands to each cell, the method further comprises:
receiving, with respect to any cell to which a sub-band has been allocated, Overload Indicator OI information transmitted between the neighboring cells, the OI information including a magnitude of interference on the RBs in the sub-band allocated to the neighboring cell (701);
determining RBs on which interference meets a set condition from the sub-band allocated to the neighboring cell (702), and determining RBs that are overlapped with the RBs on which interference meets the set condition from the sub-band allocated to the cell (703); and
reducing a scheduling priority of the determined overlapped RBs to be lower than a scheduling priority of the other RBs in the sub-band allocated to the cell, or reducing transmission power of the determined overlapped RBs to be lower than transmission power of the other RBs in the sub-band allocated to the cell (704).

7. The method according to claim 1, wherein, after allocating the divided sub-bands to each cell, the method further comprises:
determining, with respect to any cell to which a sub-band has been allocated, RBs occupied by a designated downlink channel of a neighboring cell of the cell from a sub-band allocated to the neighboring cell (301); and
determining RBs occupied by Physical Downlink Shared CHannel PDSCH from the sub-band allocated to the cell (302), selecting RBs that are not overlapped with the RBs occupied by the designated downlink channel from the RBs occupied by PDSCH (303), and carrying the PDSCH of the cell by using the selected RBs (304).

8. The method according to claim 1, wherein, after allocating the divided sub-bands to each cell, the method further comprises:
determining, with respect to any cell to which a sub-band has been allocated, RBs occupied by a designated downlink channel of a neighboring cell of the cell from a sub-band allocated to the neighboring cell (401);
determining RBs that are overlapped with the RBs occupied by the designated downlink channel of the neighboring cell from the sub-band allocated to the cell (402); and
reducing a scheduling priority of the determined overlapped RBs to be lower than a scheduling priority of the other RBs in the sub-band allocated to the cell, or reducing transmission power of the determined overlapped RBs to be lower than transmission power of the other RBs in the sub-band allocated to the cell (403).

9. The method according to claim 7 or 8, wherein
the designated downlink channel is Physical Broadcast CHannel PBCH and/or Synchronization Channel SS; and
the determining RBs occupied by a designated downlink channel of the neighboring cell comprises:
determining, according to a center frequency of the neighboring cell and a bandwidth of the sub-band allocated to the neighboring cell, RBs occupied by the frequency band with a center set length in the sub-band allocated to the neighboring cell as the RBs occupied by the designated downlink channel of the neighboring cell.

10. The method according to claim 1, wherein the allocating the divided sub-bands to each cell comprises:
allocating a sub-band to each cell; or
allocating a plurality of sub-bands to at least one cell, any two of the plurality of sub-bands allocated to an identical cell being not overlapped with each other.

11. A networking device for frequency reuse, wherein the device comprises:
a division module (11), configured to divide a total available frequency band of a system into a plurality of sub-bands in advance;
an allocation module (12), configured to allocate the divided sub-bands to each cell, wherein the sub-bands allocated to at least two cells are overlapped with each other,
**characterized by** further comprising:
a load determination module (13), configured to determine load of neighboring cells with respect to the neighboring cells with overlapped sub-bands; and
a schedule module (14), when the load of the neighboring cells is less than a load threshold, configured to instruct the neighboring cells to use the frequency band of a non-overlapped portion to schedule service and, when the load of any cell is not less than the load threshold, configured to instruct the cell to use the frequency band of the non-overlapped portion in the sub-band allocated thereto to schedule service in a priority higher than the frequency band of an overlapped portion used to schedule service in a lower priority.

12. The device according to claim 11, wherein the allocation module (12) comprises:
a correlation determination sub-module (21), configured to determine correlation between the sub-bands, wherein the greater the proportion of a bandwidth of an overlapped portion between any two sub-bands to a total bandwidth of the two sub-bands, the higher the correlation of the two sub-bands; and
an execution sub-module (22), configured to allocate the divided sub-bands to each cell according to the correlation between the sub-bands,
wherein the execution sub-module (22), configured to allocate the divided sub-bands to each cell based on a principle that the shorter a physical distance between two cells, the lower the correlation between the sub-bands allocated to the two cells.

13. The device according to claim 11, wherein the device further comprises:
a neighboring cell RB determination module, configured to determine, with respect to any cell to which a sub-band has been allocated, RBs occupied by Physical Uplink Control CHannel PUCCH of a neighboring cell of the cell from the sub-band allocated to the neighboring cell;
a RB selection module, configured to determine RBs occupied by Physical Uplink Shared CHannel PUSCH in the sub-band allocated to the cell and selecting the RBs that are not overlapped with the RBs occupied by the PUCCH from the RBs occupied by PUSCH; and
an instruction module, configured to instruct the cell to carry PUSCH by using the selected RBs,
wherein the neighboring cell RB determination module, configured to determine the RBs at both ends of the sub-band allocated to the neighboring cell according to a center frequency of the neighboring cell and a bandwidth of the sub-band allocated to the neighboring cell, and determine M/2 RBs at both ends of the sub-band allocated to the neighboring cell as the RBs occupied by PUCCH of the neighboring cell, wherein M is the number of RBs occupied by PUCCH of the neighboring cell.

14. The device according to claim 11, wherein the device further comprises:
a neighboring cell RB determination module, configured to determine, with respect to any cell to which a sub-band has been allocated, RBs occupied by PUCCH of a neighboring cell of the cell from the sub-band allocated to the neighboring cell;
a RB selection module, configured to determine the RBs that are overlapped with RBs occupied by PUCCH of the neighboring cell from the sub-band allocated to the cell; and
an adjustment module, configured to reduce a scheduling priority of the determined overlapped RBs to be lower than a scheduling priority of the other RBs in the sub-band allocated to the cell, or reduce transmission power of the determined overlapped RBs to be lower than transmission power of the other RBs in the sub-band allocated to the cell,.
wherein the neighboring cell RB determination module, configured to determine the RBs at both ends of the sub-band allocated to the neighboring cell according to a center frequency of the neighboring cell and a bandwidth of the sub-band allocated to the neighboring cell, and determine M/2 RBs at both ends of the sub-band allocated to the neighboring cell as the RBs occupied by PUCCH of the neighboring cell, wherein M is the number of RBs occupied by PUCCH of the neighboring cell.

15. The device according to claim 11, wherein the device further comprises:
an information reception module, configured to receive Overload Indicator OI information transmitted between the neighboring cells with respect to any cell to which a sub-band has been allocated, the OI information including a magnitude of the interference on the RBs in the sub-bands allocated to the neighboring cells;
a neighboring cell RB determination module, configured to determine the RBs on which the interference meets a set condition from the sub-bands allocated to the neighboring cells;
a RB selection module, configured to determine the RBs that are overlapped with the RBs on which the interference meets the set condition from the sub-band allocated to the cell; and
an adjusting module, configured to reduce a scheduling priority of the determined overlapped RBs to be lower than a scheduling priority of the other RBs in the sub-bands allocated to the cell, or reduce transmission power of the determined overlapped RBs to be lower than transmission power of the other RBs in the sub-band allocated to the cell.

16. The device according to claim 11, wherein the device further comprises:
a neighboring cell RB determination module, configured to determine, with respect to any cell to which a sub-band has been allocated, RBs occupied by a designated downlink channel of a neighboring cell of the cell from the sub-band allocated to the neighboring cell;
a RB selection module, configured to determine RBs occupied by Physical Downlink Shared CHannel PDSCH from the sub-band allocated to the cell and selecting the RBs that are not overlapped with the RBs occupied by the designated downlink channel from the RBs occupied by PDSCH; and
an instruction module, configured to instruct the cell to carry PDSCH by using the selected RBs,
wherein the neighboring cell RB determination module, configured to determine the RBs occupied by the frequency band with a center set length in the sub-band allocated to the neighboring cell as the RBs occupied by the designated downlink channel of the neighboring cell according to a center frequency of the neighboring cell and a bandwidth of the sub-band allocated to the neighboring cell.

17. The device according to claim 11, wherein the device further comprises:
a neighboring cell RB determination module, onfigured to determine, with respect to any cell to which a sub-band has been allocated, RBs occupied by a designated downlink channel of a neighboring cell of the cell from the sub-band allocated to the neighboring cell;
a RB selection module, configured to determine RBs that are overlapped with the RBs occupied by the designated downlink channel of the neighboring cell from the sub-band allocated to the cell; and
an adjustment module, configured to reduce a scheduling priority of the determined overlapped RBs to be lower than a scheduling priority of the other RBs in the sub-band allocated to the cell, or reduce transmission power of the determined overlapped RBs to be lower than transmission power of the other RBs in the sub-band allocated to the cell,
wherein the neighboring cell RB determination module, configured to determine the RBs occupied by the frequency band with a center set length in the sub-band allocated to the neighboring cell as the RBs occupied by the designated downlink channel of the neighboring cell according to a center frequency of the neighboring cell and a bandwidth of the sub-band allocated to the neighboring cell.

18. The device according to claim 11, wherein
the allocation module (12) is configured to allocate a sub-band to each cell, or allocate a plurality of sub-bands to at least one cell, wherein any two of the plurality of sub-bands allocated to an identical cell are not overlapped with each other.

## Patentansprüche

1. Netzwerkverfahren zur Frequenzwiederverwendung, wobei ein insgesamt verfügbares Frequenzband eines Systems in eine Mehrzahl von Teilbänder (101) unterteilt wird,
wobei das Netzwerkverfahren zur Frequenzwiederverwendung umfasst:
Zuweisen der unterteilten Teilbänder zu jeder Zelle, wobei die Teilbänder, die zumindest zwei Zellen zugewiesen sind, einander überlappen (102);
**dadurch gekennzeichnet, dass** es ferner umfasst, in Bezug auf eine benachbarte Zelle mit überlappten Teilbändern, Verwenden eines Frequenzbandes eines nicht überlappten Abschnitts der benachbarten Zelle, um einen Dienst zu planen bzw. festzulegen, wenn eine Belastung der benachbarten Zelle geringer ist als ein Belastungsschwellenwert; und
Verwenden eines Frequenzbands eines nicht überlappten Abschnitts in dem einer beliebigen Zelle zugewiesenen Teilband, um einen Dienst in einer höheren Priorität zu planen bzw. festzulegen als ein Frequenzband eines überlappten Abschnitts, das zum Planen bzw. Festlegen eines Dienstes in einer niedrigeren Priorität verwendet wird, wenn die Belastung der beliebigen Zelle nicht geringer ist als der Belastungsschwellenwert.

2. Verfahren nach Anspruch 1, wobei das Zuweisen der unterteilten Teilbänder zu jeder Zelle umfasst:
Zuweisen der unterteilten Teilbänder zu jeder Zelle gemäß einer Korrelation zwischen den Teilbändern,
wobei, je größer der Anteil einer Bandbreite einer Überlappung zwischen zwei beliebigen Teilbändern an einer Gesamtbandbreite der beiden Teilbänder ist, desto höher die Korrelation zwischen den zwei Teilbändern ist,
wobei das Zuweisen der unterteilten Teilbänder zu jeder Zelle gemäß der Korrelation zwischen den Teilbändern umfasst:
Zuweisen der unterteilten Teilbänder zu jeder Zelle basierend auf einem Prinzip, dass je kürzer ein physikalischer bzw. physischer Abstand zwischen zwei Zellen ist, desto geringer die Korrelation zwischen den Teilbändern ist, die den beiden Zellen zugewiesen sind.

3. Verfahren nach Anspruch 1, wobei nach dem Zuweisen der unterteilten Teilbänder zu jeder Zelle das Verfahren ferner umfasst:
Bestimmen, in Bezug auf irgendeine Zelle, der ein Teilband zugewiesen wurde, von Ressourcenblöcken RBs, die durch einen Physical Uplink Control CHannel PUCCH einer benachbarten Zelle der Zelle belegt sind, aus einem Teilband, das der benachbarten Zelle (501) zugewiesen ist; und
Bestimmen von RBs, die durch einen Physikal Uplink Shared CHannel PUSCH belegt sind, aus dem der Zelle zugewiesenen Teilband (502), Auswählen von RBs, die nicht mit den durch den PUCCH belegten RBs überlappen, aus den durch den PUSCH (503) belegten RBs, und Tragen des PUSCH der Zelle unter Verwendung der ausgewählte RBs (504).

4. Verfahren nach Anspruch 1, wobei nach dem Zuweisen der unterteilten Teilbänder zu jeder Zelle das Verfahren ferner umfasst:
Bestimmen, in Bezug auf irgendeine Zelle, der ein Teilband zugewiesen wurde, von RBs, die durch PUCCH einer benachbarten Zelle der Zelle belegt sind, aus einem Teilband, das der benachbarten Zelle (601) zugewiesen ist;
Bestimmen von RBs, die mit den durch PUCCH der benachbarten Zelle belegten RBs überlappt sind, aus dem der Zelle (602) zugewiesenen Teilband; und
Reduzieren einer Planungs- bzw. Festlegungspriorität der bestimmten überlappten RBs dahingehend, niedriger zu sein als eine Planungs- bzw. Festlegungspriorität der anderen RBs in dem der Zelle zugewiesenen Teilband, oder Reduzieren einer Übertragungsleistung der bestimmten überlappten RBs dahingehend, niedriger zu sein als eine Übertragungsleistung der anderen RBs in dem der Zelle (603) zugewiesenen Teilband.

5. Verfahren nach Anspruch 3 oder 4, wobei das Bestimmen von durch PUCCH der benachbarten Zelle belegten RBs umfasst:
Bestimmen der durch PUCCH der benachbarten Zelle belegten RBs gemäß einer Mittenfrequenz der benachbarten Zelle und einer Bandbreite des der benachbarten Zelle zugewiesenen Teilbands,
wobei das Bestimmen von durch PUCCH der benachbarten Zelle belegten RBs umfasst:
Bestimmen der RBs an beiden Enden eines der benachbarten Zelle zugewiesenen Teilbands gemäß einer Mittenfrequenz der benachbarten Zelle und einer Bandbreite des der benachbarten Zelle zugewiesenen Teilbands; und
Verwenden von M/2 RBs an beiden Enden des der benachbarten Zelle zugewiesenen Teilbands als die von PUCCH der benachbarten Zelle belegten RBs, wobei M die Anzahl der von PUCCH der benachbarten Zelle belegten RBs ist.

6. Verfahren nach Anspruch 1, wobei nach dem Zuweisen der unterteilten Teilbänder zu jeder Zelle das Verfahren ferner umfasst:
Empfangen, in Bezug auf irgendeine Zelle, der ein Teilband zugewiesen wurde, von Overload-Indikator-Ol-Informationen, die zwischen den benachbarten Zellen übertragen werden, wobei die OI-Informationen eine Stärke der Interferenz auf bzw. an den RBs in dem der benachbarten Zelle (701) zugewiesenen Teilband enthalten;
Bestimmen von RBs, an denen die Interferenz eine festgelegte Bedingung erfüllt, aus dem der benachbarten Zelle (702) zugewiesenen Teilband und Bestimmen von RBs, die mit den RBs überlappt sind, an denen die Interferenz die festgelegte Bedingung erfüllt, aus dem der benachbarten Zelle (703) zugewiesenen Teilband; und
Reduzieren einer Planungs- bzw. Festlegungspriorität der bestimmten überlappten RBs dahingehend, niedriger zu sein als eine Planungs- bzw. Festlegungspriorität der anderen RBs in dem der Zelle zugewiesenen Teilband, oder Reduzieren der Übertragungsleistung der bestimmten überlappten RBs dahingehend, niedriger zu sein als die Übertragungsleistung der anderen RBs in dem der Zelle (704) zugewiesenen Teilband.

7. Verfahren nach Anspruch 1, wobei nach dem Zuweisen der unterteilten Teilbänder zu jeder Zelle das Verfahren ferner umfasst:
Bestimmen, in Bezug auf irgendeine Zelle, der ein Teilband zugewiesen wurde, von RBs, die von einem designierten Downlink-Kanal einer benachbarten Zelle der Zelle belegt sind, aus einem der benachbarten Zelle (301) zugewiesenen Teilband; und
Bestimmen von RBs, die durch Physikal Downlink Shared CHannel PDSCH belegt sind, aus dem der Zelle (302) zugewiesenen Teilband, Auswählen von RBs, die nicht mit den durch den designierten Downlink-Kanal belegten RBs überlappen, aus den durch PDSCH (303) belegten RBs, und Tragen des PDSCH der Zelle unter Verwendung der ausgewählten RBs (304).

8. Verfahren nach Anspruch 1, wobei nach dem Zuweisen der unterteilten Teilbänder zu jeder Zelle das Verfahren ferner umfasst:
Bestimmen, in Bezug auf irgendeine Zelle, der ein Teilband zugewiesen wurde, von RBs, die von einem designierten Downlink-Kanal einer benachbarten Zelle der Zelle belegt sind, aus einem der benachbarten Zelle (401) zugewiesenen Teilband;
Bestimmen von RBs, die mit den durch den designierten Downlink-Kanal der benachbarten Zelle belegten RBs überlappt sind, aus dem der Zelle (402) zugewiesenen Teilband; und
Reduzieren einer Planungs- bzw. Festlegungspriorität der bestimmten überlappten RBs dahingehend, niedriger zu sein als eine Planungs- bzw. Festlegungspriorität der anderen RBs in dem der Zelle zugewiesenen Teilband, oder Reduzieren der Übertragungsleistung der bestimmten überlappten RBs dahingehend, niedriger zu sein als die Übertragungsleistung der anderen RBs in dem der Zelle (403) zugewiesenen Teilband.

9. Verfahren nach Anspruch 7 oder 8, wobei
der designierte Downlink-Kanal ein Physical Broadcast CHannel PBCH und/oder der Synchronization Channel bzw. Synchronisationskanal SS ist; und wobei das Bestimmen von RBs, die durch einen designierten Downlink-Kanal der benachbarten Zelle belegt sind, umfasst:
Bestimmen, gemäß einer Mittenfrequenz der benachbarten Zelle und einer Bandbreite des der benachbarten Zelle zugewiesenen Teilbands, von RBs, die von dem Frequenzband mit einer Mitteneinstelllänge in dem der benachbarten Zelle zugewiesenen Teilband belegt sind, als die RBs, die durch den designierten Downlink-Kanal der benachbarten Zelle belegt sind.

10. Verfahren nach Anspruch 1, wobei das Zuweisen der unterteilten Teilbänder zu jeder Zelle umfasst:
Zuweisen eines Teilbands zu jeder Zelle; oder
Zuweisen einer Mehrzahl von Teilbändern zu zumindest einer Zelle, wobei sich zwei der Mehrzahl von Teilbändern, die einer identischen Zelle zugewiesen sind, nicht gegenseitig überlappen.

11. Netzwerkvorrichtung zur Frequenzwiederverwendung, wobei die Vorrichtung umfasst:
ein Unterteilungsmodul (11), das konfiguriert ist, ein insgesamtes verfügbares Frequenzband eines Systems im Voraus in eine Mehrzahl von Teilbändern zu unterteilen; und
ein Zuweisungsmodul (12), das konfiguriert ist, die unterteilten Teilbänder jeder Zelle zuzuweisen, wobei sich die zumindest zwei Zellen zugewiesenen Teilbänder einander überlappen,
**dadurch gekennzeichnet, dass** sie ferner umfasst:
ein Belastungsbestimmungsmodul (13), das konfiguriert ist, die Belastung von benachbarten Zellen in Bezug auf die benachbarten Zellen mit überlappenden Teilbändern zu bestimmen; und
ein Planungs- bzw. Festlegungsmodul (14), das, wenn die Belastung der benachbarten Zellen geringer als ein Belastungsschwellenwert ist, konfiguriert ist, die benachbarten Zelle anzuweisen, das Frequenzband eines nicht überlappten Abschnitts zu verwenden, um einen Dienst zu planen bzw. festzulegen, und wenn die Belastung einer Zelle nicht geringer als der Belastungsschwellenwert ist, konfiguriert ist, die Zelle anzuweisen, das Frequenzband des nicht überlappten Abschnitts in dem ihr zugewiesenen Teilband zu verwenden, um einen Dienst in einer höheren Priorität zu planen bzw. festzulegen als das Frequenzband eines überlappten Abschnitts, das zum Planen bzw. Festlegen eines Dienstes in einer niedrigeren Priorität verwendet wird.

12. Vorrichtung nach Anspruch 11, wobei das Zuweisungsmodul (12) umfasst:
ein Korrelationsbestimmungsuntermodul (21), das konfiguriert ist, eine Korrelation zwischen den Teilbändern zu bestimmen, wobei je größer der Anteil einer Bandbreite eines überlappten Abschnitts zwischen zwei beliebigen Teilbändern an einer Gesamtbandbreite der beiden Teilbänder ist, desto höher die Korrelation der beiden Teilbändern ist; und
ein Ausführungsuntermodul (22), das konfiguriert ist, die unterteilten Teilbänder jeder Zelle gemäß der Korrelation zwischen den Teilbändern zuzuweisen, wobei das Ausführungsuntermodul (22) konfiguriert ist, die unterteilten Teilbänder jeder Zelle basierend auf einem Prinzip zuzuweisen, dass je kürzer ein physikalischer bzw. physischer Abstand zwischen zwei Zellen ist, desto geringer die Korrelation zwischen den den beiden Zellen zugewiesenen Teilbändern ist.

13. Vorrichtung nach Anspruch 11, wobei die Vorrichtung ferner umfasst:
ein Nachbarzellen-RB-Bestimmungsmodul, das konfiguriert ist, in Bezug auf irgendeine Zelle, der ein Teilband zugewiesen wurde, RBs, die durch einen Physical Uplink Control CHannel PUCCH einer benachbarten Zelle der Zelle belegt sind, aus einem Teilband zu bestimmen, das der benachbarten Zelle zugewiesen ist;
ein RB-Auswahlmodul, das konfiguriert ist, RBs, die durch einen Physikal Uplink Shared CHannel PUSCH belegt sind, in dem der Zelle zugewiesenen Teilband zu bestimmen und die RBs, die nicht mit den durch den PUCCH belegten RBs überlappen, aus den durch den PUSCH (503) belegten RBs auszuwählen; und
ein Anweisungsmodul, das konfiguriert ist, die Zelle anzuweisen, PUSCH unter Verwendung der ausgewählten RBs zu tragen,
wobei das Nachbarzellen-RB-Bestimmungsmodul konfiguriert ist zum Bestimmen der RBs an beiden Enden des der benachbarten Zelle zugewiesenen Teilbands gemäß einer Mittenfrequenz der benachbarten Zelle und einer Bandbreite des der benachbarten Zelle zugewiesenen Teilbands und
Bestimmen von M/2 RBs an beiden Enden des der benachbarten Zelle zugewiesenen Teilbands als die von PUCCH der benachbarten Zelle belegten RBs, wobei M die Anzahl der von PUCCH der benachbarten Zelle belegten RBs ist.

14. Vorrichtung nach Anspruch 11, wobei die Vorrichtung ferner umfasst:
ein Nachbarzellen-RB-Bestimmungsmodul, das konfiguriert ist, in Bezug auf irgendeine Zelle, der ein Teilband zugewiesen wurde, RBs, die durch PUCCH einer benachbarten Zelle der Zelle belegt sind, aus dem Teilband zu bestimmen, das der benachbarten Zelle zugewiesen ist;
ein RB-Auswahlmodul, das konfiguriert ist, die RBs, die mit durch PUCCH der benachbarten Zelle belegte RBs überlappt sind, aus dem der Zelle zugewiesenen Teilband zu bestimmen; und
ein Einstellungs- bzw. Anpassungsmodul, das konfiguriert ist, Planungs- bzw. Festlegungspriorität der bestimmten überlappten RBs dahingehend zu verringern, niedriger zu sein als eine Planungs- bzw. Festlegungspriorität der anderen RBs in dem der Zelle zugewiesenen Teilband, oder eine Übertragungsleistung der bestimmten überlappten RBs dahingehend zu verringern, niedriger zu sein als eine Übertragungsleistung der anderen RBs in dem der Zelle zugewiesenen Teilband,
wobei das Nachbarzellen-RB-Bestimmungsmodul konfiguriert ist zum Bestimmen der RBs an beiden Enden des der benachbarten Zelle zugewiesenen Teilbands gemäß einer Mittenfrequenz der benachbarten Zelle und einer Bandbreite des der benachbarten Zelle zugewiesenen Teilbands und
Bestimmen von M/2 RBs an beiden Enden des der benachbarten Zelle zugewiesenen Teilbands als die von PUCCH der benachbarten Zelle belegten RBs, wobei M die Anzahl der von PUCCH der benachbarten Zelle belegten RBs ist.

15. Vorrichtung nach Anspruch 11, wobei die Vorrichtung ferner umfasst:
ein Informationsempfangsmodul, das konfiguriert ist, Overload-Indikator-OI-Informationen zu empfangen, die zwischen den benachbarten Zellen in Bezug auf eine Zelle übertragen werden, der ein Teilband zugewiesen wurde, wobei die OI-Informationen eine Stärke der Interferenz auf bzw. an den RBs in dem den benachbarten Zellen zugewiesenen Teilbändern enthalten;
ein Nachbarzellen-RB-Bestimmungsmodul, das konfiguriert ist, die RBs, an denen die Interferenz eine festgelegte Bedingung erfüllt, aus den den benachbarten Zellen zugewiesenen Teilbändern zu bestimmen;
ein RB-Auswahlmodul, das konfiguriert ist, die RBs, die mit den RBs überlappt sind, an denen die Interferenz die festgelegte Bedingung erfüllt, aus dem der Zelle zugewiesenen Teilband zu bestimmen; und
ein Einstellungs- bzw. Anpassungsmodul, das konfiguriert ist, Planungs- bzw. Festlegungspriorität der bestimmten überlappten RBs dahingehend zu verringern, niedriger zu sein als eine Planungs- bzw. Festlegungspriorität der anderen RBs in den der Zelle zugewiesenen Teilbändern, oder eine Übertragungsleistung der bestimmten überlappten RBs dahingehend zu verringern, niedriger zu sein als eine Übertragungsleistung der anderen RBs in dem der Zelle zugewiesenen Teilband.

16. Vorrichtung nach Anspruch 11, wobei die Vorrichtung ferner umfasst:
ein Nachbarzellen-RB-Bestimmungsmodul, das konfiguriert ist, in Bezug auf irgendeine Zelle, der ein Teilband zugewiesen wurde, RBs, die durch einen designierten Downlink-Kanal einer benachbarten Zelle der Zelle belegt sind, aus dem Teilband zu bestimmen, das der benachbarten Zelle zugewiesen ist; ein RB-Auswahlmodul, das konfiguriert ist, RBs, die durch einen Physikal Downlink Shared CHannel PDSCH belegt sind, aus dem der Zelle zugewiesenen Teilband zu bestimmen und die RBs, die nicht mit den durch den designierten Downlink-Kanal belegten RBs überlappt sind, aus den durch PDSCH belegten RBs zu bestimmen; und
ein Anweisungsmodul, das konfiguriert ist, s die Zelle anzuweisen, PDSCH unter Verwendung der ausgewählten RBs zu tragen,
wobei das Nachbarzellen-RB-Bestimmungsmodul konfiguriert ist, die RBs, die von dem Frequenzband mit einer Mitteneinstelllänge in dem der benachbarten Zelle zugewiesenen Teilband belegt sind, als die RBs, die durch den designierten Downlink-Kanal der benachbarten Zelle belegt sind, gemäß einer Mittenfrequenz der benachbarten Zelle und einer Bandbreite des der benachbarten Zelle zugewiesenen Teilbands zu bestimmen.

17. Vorrichtung nach Anspruch 11, wobei die Vorrichtung ferner umfasst:
ein Nachbarzellen-RB-Bestimmungsmodul, das konfiguriert ist, in Bezug auf irgendeine Zelle, der ein Teilband zugewiesen wurde, RBs, die durch einen designierten Downlink-Kanal einer benachbarten Zelle der Zelle belegt sind, aus dem Teilband zu bestimmen, das der benachbarten Zelle zugewiesen ist;
ein RB-Auswahlmodul, das konfiguriert ist, RBs, die mit den durch den designierten Downlink-Kanal der benachbarten Zelle belegten RBs überlappt sind, aus dem der Zelle zugewiesenen Teilband zu bestimmen; und
ein Einstellungs- bzw. Anpassungsmodul, das konfiguriert ist, Planungs- bzw. Festlegungspriorität der bestimmten überlappten RBs dahingehend zu verringern, niedriger zu sein als eine Planungs- bzw. Festlegungspriorität der anderen RBs in dem der Zelle zugewiesenen Teilband, oder eine Übertragungsleistung der bestimmten überlappten RBs dahingehend zu verringern, niedriger zu sein als eine Übertragungsleistung der anderen RBs in dem der Zelle zugewiesenen Teilband,
wobei das Nachbarzellen-RB-Bestimmungsmodul konfiguriert ist, die RBs, die von dem Frequenzband mit einer Mitteneinstelllänge in dem der benachbarten Zelle zugewiesenen Teilband belegt sind, als die RBs, die durch den designierten Downlink-Kanal der benachbarten Zelle belegt sind, gemäß einer Mittenfrequenz der benachbarten Zelle und einer Bandbreite des der benachbarten Zelle zugewiesenen Teilbands zu bestimmen.

18. Vorrichtung nach Anspruch 11, wobei
das Zuweisungsmodul (12) konfiguriert ist, jeder Zelle ein Teilband zuzuweisen oder zumindest einer Zelle eine Mehrzahl von Teilbändern zuzuweisen, wobei zwei beliebige der Mehrzahl von Teilbändern, die einer identischen Zelle zugewiesen sind, einander nicht überlappen.

## Revendications

1. Procédé de mise en réseau pour une réutilisation de fréquence, dans laquelle une bande de fréquence totalement disponible d'un système est divisée en une pluralité de sous-bandes (101),
la méthode de mise en réseau pour une réutilisation de fréquence comprenant :
l'attribution de sous-bandes divisées à chaque cellule, dans lesquelles les sous-bandes attribuées à au moins deux cellules se superposent les unes avec les autres (102),
**caractérisé en ce qu'**il comprend en outre, par rapport à une cellule voisine des sous-bandes superposées, l'utilisation d'une bande de fréquence d'une partie non-superposée de la cellule voisine pour un ordonnancement régulier quand la charge de la cellule voisine est inférieure à un seuil de charge; et
l'utilisation d'une bande de fréquence d'une partie non-superposée dans la sous-bande attribuée à n'importe quelle cellule pour planifier l'ordonnancement à un niveau de priorité plus élevé qu'une bande de fréquence dans une partie superposée utilisée pour planifier l'ordonnancement de niveau de priorité inférieur, lorsque la charge de n'importe quelle cellule n'est pas inférieure au seuil de charge.

2. Procédé selon la revendication 1, dans laquelle l'attribution des sous-bandes divisées à chaque cellule comprend :
l'attribution des sous-bandes divisées à chaque cellule en fonction de la corrélation entre les sous-bandes,
dans lequel la plus grande proportion de bande passante d'une superposition entre deux sous-bandes correspond à une bande passante totale des deux sous-bandes, plus la corrélation entre les deux sous-bandes est élevée,
dans lequel l'attribution des sous-bandes divisées à chaque cellule en fonction d'une corrélation entre les sous-bandes comprend:
l'attribution des sous-bandes divisées à chaque cellule sur la base d'une distance physique plus courte entre deux cellules, plus la corrélation entre les sous-bandes attribuées aux deux cellules est faible.

3. Procédé selon la revendication 1, dans laquelle après l'attribution des sous-bandes divisées à chaque cellule, le procédé comprend en outre :
la détermination, par rapport à toute cellule à laquelle une sous-bande a été attribuée, des blocs de ressources RB occupés par le canal de commande de liaison montante physique PUCCH d'une cellule voisine de la cellule d'une sous-bande attribuée à la cellule voisine (501); et
la détermination des RB occupés par la canal de partage de liaison montante physique PUSCH à partir de la sous-bande attribuée à la cellule (502), la sélection des RB qui ne sont pas superposés avec les RB occupés par le PUCCH à partir des RB occupés par le PUSCH (503), et le transport du PUSCH de la cellule en utilisant les RB sélectionnés (504).

4. Procédé selon la revendication 1, dans lequel, après attribution des sous-bandes divisées à chaque cellule, le procédé comprend en outre:
la détermination, par rapport à toute cellule à laquelle une sous-bande a été attribuée, des RB occupés par le PUCCH d'une cellule voisine de la cellule d'une sous-bande allouée à la cellule voisine (601);
la détermination des RB qui sont superposés avec les RB occupés par le PUCCH de la cellule voisine à partir de la sous-bande allouée à la cellule (602); et
la réduction d'une priorité d'ordonnancement des RB superposés déterminés pour être inférieure à une priorité d'ordonnancement des autres RB dans la sous-bande allouée à la cellule, ou la réduction de la puissance de transmission des RB superposés déterminés pour être inférieure à la puissance de transmission des autres RB dans la sous-bande allouée à la cellule (603).

5. Procédé selon la revendication 3 ou 4, dans lequel la détermination de RB occupés par le PUCCH d'une cellule voisine comprend:
la détermination des RB occupés par le PUCCH de la cellule voisine selon une fréquence centrale de la cellule voisine et une bande passante de la sous-bande allouée à la cellule voisine,
dans lequel la détermination des RB occupés par le PUCCH d'une cellule voisine comprend:
la détermination des RB aux deux extrémités d'une sous-bande allouée à la cellule voisine en fonction d'une fréquence centrale de la cellule voisine et d'une bande passante d'une sous-bande allouée à la cellule voisine; et
l'utilisation des M/2 RB aux deux extrémités de la sous-bande allouée à la cellule voisine en tant que RB occupés par le PUCCH de la cellule voisine, M étant le nombre de RB occupés par le PUCCH de la cellule voisine.

6. Procédé selon la revendication 1, dans lequel, après attribution des sous-bandes divisées à chaque cellule, le procédé comprend en outre:
la réception, par rapport à toute cellule à laquelle une sous-bande a été allouée, d'informations d'indicateur de surcharge OI transmises entre les cellules, les informations OI comprenant une grandeur d'interférence sur les RB dans la sous-bande allouée à la cellule voisine (701);
la détermination des RB sur lesquels une interférence satisfait à une condition définie de la sous-bande attribuée à la cellule voisine (702), et la détermination des RB qui sont superposés avec les RB sur lesquels l'interférence satisfait à la condition définie de la sous-bande attribuée à la cellule (703); et
la réduction d'une priorité d'ordonnancement des RB superposés déterminés pour être inférieure à une priorité d'ordonnancement des autres RB dans la sous-bande allouée à la cellule, ou la réduction de la puissance de transmission des RB superposés déterminés pour être inférieure à la puissance de transmission des autres RB dans la sous-bande allouée à la cellule (704).

7. Procédé selon la revendication 1, dans lequel, après attribution des sous-bandes divisées à chaque cellule, le procédé comprend en outre:
la détermination, par rapport à toute cellule à laquelle une sous-bande a été allouée, des RB occupés par un canal de liaison descendante désigné d'une cellule voisine de la cellule d'une sous-bande allouée à la cellule voisine (301); et
la détermination des RB occupées par le canal de partage de liaison descendante physique PDSCH à partir de la sous-bande allouée à la cellule (302), la sélection des RB qui ne se chevauchent pas avec les RB occupés par le canal descendant désigné des RB occupés par le PDSCH (303), et le transport du PDSCH de la cellule en utilisant les RB sélectionnés (304).

8. Procédé selon la revendication 1, dans lequel, après attribution des sous-bandes divisées à chaque cellule, le procédé comprend en outre:
la détermination, par rapport à toute cellule à laquelle une sous-bande a été allouée, des RB occupés par un canal de liaison descendante désigné d'une cellule voisine de la cellule d'une sous-bande allouée à la cellule voisine (401);
la détermination des RB qui sont superposés avec les RB occupés par le canal de liaison descendante désigné de la cellule voisine à partir de la sous-bande allouée à la cellule (402); et
la réduction d'une priorité d'ordonnancement des RB superposés déterminés pour être inférieure à une priorité d'ordonnancement des autres RB dans la sous-bande allouée à la cellule, ou la réduction de la puissance de transmission des RB superposés déterminés pour être inférieure à la puissance de transmission des autres RB dans la sous-bande allouée à la cellule (403).

9. Procédé selon la revendication 7 ou 8, dans lequel le canal de liaison descendante désigné est le canal d'émission physique PBCH et / ou le canal de synchronisation SS ; et
la détermination des RB occupés par un canal de liaison descendante désigné de la cellule voisine comprend:
la détermination, en fonction d'une fréquence centrale de la cellule voisine et une bande passante de la sous-bande attribuée à la cellule voisine, les RB occupés par la bande de fréquence avec une longueur établie centrale dans la sous-bande attribuée à la cellule voisine en tant que RB occupés par le canal de liaison descendante désigné de la cellule voisine.

10. Procédé selon la revendication 1, dans lequel l'attribution des sous-bandes divisées à chaque cellule comprend:
l'attribution d'une sous-bande à chaque cellule; ou
l'attribution d'une pluralité de sous-bandes à au moins une cellule, deux quelconques de la pluralité de sous-bandes attribuées à une cellule identique ne se superposant pas.

11. Dispositif de mise en réseau pour une réutilisation de fréquence, dans lequel le dispositif comprend:
un module de division (11), configuré pour diviser à l'avance une bande de fréquence totale disponible d'un système en une pluralité de sous-bandes;
un module d'attribution (12), configuré pour attribuer les sous-bandes divisées à chaque cellule, dans lequel les sous-bandes allouées à au moins deux cellules se superposent l'une l'autre,
**caractérisé en ce qu'**il comprend en outre :
un module de détermination de charge (13), configuré pour déterminer la charge de cellules voisines par rapport aux cellules voisines avec des sous-bandes superposées; et
un module de planification (14), lorsque la charge des cellules voisines est inférieure à un seuil de charge, configuré pour ordonner aux cellules voisines d'utiliser la bande de fréquence d'une partie non-superposée pour planifier l'ordonnancement et, lorsque la charge de toute cellule n'est pas inférieure au seuil de charge, configuré pour ordonner à la cellule d'utiliser la bande de fréquence de la partie non chevauchante dans la sous-bande qui lui est attribuée pour planifier l'ordonnancement dans une priorité supérieure à la bande de fréquence d'une partie superposée utilisée pour planifier le service dans une priorité inférieure.

12. Dispositif selon la revendication 11, dans lequel le module d'attribution (12) comprend:
un sous-module de détermination de corrélation (21), configuré pour déterminer une corrélation entre les sous-bandes, dans lequel plus la proportion d'une bande passante d'une partie superposée entre deux sous-bandes est grande par rapport à la bande passante totale des deux sous-bandes, plus la corrélation des deux sous-bandes est élevée; et
un sous-module d'exécution (22), configuré pour attribuer les sous-bandes divisées à chaque cellule en fonction de la corrélation entre les sous-bandes,
dans lequel le sous-module d'exécution (22), configuré pour attribuer les sous-bandes divisées à chaque cellule, repose sur le principe que plus la distance physique entre deux cellules est courte, plus la corrélation entre les sous-bandes allouées aux deux cellules est basse.

13. Dispositif selon la revendication 11, dans lequel le dispositif comprend en outre:
un module de détermination de cellule voisine RB, configuré pour déterminer, par rapport à toute cellule pour laquelle une sous-bande a été allouée, les RB occupés par le canal de commande de liaison montante physique PUCCH d'une cellule voisine de la cellule à partir de la sous-bande allouée à la cellule voisine;
un module de sélection RB, configuré pour déterminer des RB occupés par le canal de partage de liaison ascendante physique PUSCH dans la sous-bande allouée à la cellule et sélectionner les RB qui ne se superposent pas avec les RB occupés par le PUCCH à partir des RB occupés par le PUSCH; et
un module d'instruction, configuré pour ordonner à la cellule de transporter le PUSCH en utilisant les RB sélectionnés,
dans lequel le module de détermination RB de cellule voisine, est configuré pour déterminer les RB aux deux extrémités de la sous-bande allouée à la cellule voisine selon une fréquence centrale de la cellule voisine et une bande passante de la sous-bande allouée à la cellule voisine, et déterminer les M/2 RB aux deux extrémités de la sous-bande allouée à la cellule voisine comme les RB occupés par le PUCCH de la cellule voisine, où M est le nombre de RB occupés par le PUCCH du cellule voisine.

14. Dispositif selon la revendication 11, dans lequel le dispositif comprend en outre:
un module de détermination de cellule voisine RB, configuré pour déterminer, par rapport à toute cellule pour laquelle une sous-bande a été allouée, les RB occupés par le PUCCH d'une cellule voisine de la cellule à partir de la sous-bande allouée à la cellule voisine;
un module de sélection RB, configuré pour déterminer les RB qui sont superposés avec les RB occupés par le PUCCH de la cellule voisine à partir de la sous-bande allouée à la cellule ; et
un module d'ajustement, configuré pour réduire une priorité d'ordonnancement des RB superposés déterminés à être inférieure à une priorité d'ordonnancement des autres RB dans la sous-bande allouée à la cellule, ou réduire la puissance de transmission des RB superposés déterminés pour être inférieure à la puissance de transmission des autres RB dans la sous-bande allouée à la cellule,
dans lequel le module de détermination de la cellule voisine RB, est configuré pour déterminer les RB aux deux extrémités de la sous-bande allouée à la cellule voisine selon une fréquence centrale de la cellule voisine et une bande passante de la sous-bande allouée à la cellule voisine, et déterminer les M/2 RB aux deux extrémités de la sous-bande allouée à la cellule voisine comme les RB occupés par le PUCCH de la cellule voisine, où M est le nombre de RB occupés par le PUCCH du cellule voisine.

15. Dispositif selon la revendication 11, dans lequel le dispositif comprend en outre:
un module de réception d'informations, configuré pour recevoir des informations d'indicateur de surcharge OI transmises entre les cellules voisines par rapport à toute cellule à laquelle une sous-bande a été allouée, l'information OI comprenant une grandeur de l'interférence sur les RB dans les sous-bandes attribuées aux cellules voisines;
un module de détermination RB de cellule voisine, configuré pour déterminer les RB sur lesquels l'interférence rencontre une condition établie à partir des sous-bandes allouées aux cellules voisines;
un module de sélection RB, configuré pour déterminer les RB qui se superposent avec les RB sur lesquels l'interférence rencontre la condition établie à partir de la sous-bande allouée à la cellule; et
un module d'ajustement, configuré pour réduire une priorité d'ordonnancement des RB superposés déterminés à être inférieure à une priorité d'ordonnancement des autres RB dans les sous-bandes allouées à la cellule, ou réduire la puissance de transmission des RB superposés déterminés pour être inférieure à la puissance de transmission des autres RB dans la sous-bande allouée à la cellule.

16. Dispositif selon la revendication 11, dans lequel le dispositif comprend en outre:
un module de détermination RB de cellule voisine, configuré pour déterminer, par rapport à toute cellule à laquelle une sous-bande a été allouée, des RB occupés par un canal de liaison descendante désigné d'une cellule voisine de la cellule de la sous-bande allouée à la cellule voisine;
un module de sélection RB, configuré pour déterminer les RB occupés par le canal de partage de liaison descendante physique PDSCH à partir de la sous-bande allouée à la cellule et sélectionner les RB qui ne sont pas superposés avec les RB occupés par le canal de liaison descendante désigné des RB occupés par le PDSCH; et
un module d'instruction, configuré pour ordonner à la cellule de transporter le PDSCH en utilisant les RB sélectionnés,
dans lequel le module de détermination RB de cellule voisine, configuré pour déterminer les RB occupés par la bande de fréquence avec une longueur de consigne centrale dans la sous-bande allouée à la cellule voisine comme les RB occupés par le canal de liaison descendante désigné de la cellule voisine selon une fréquence centrale de la cellule voisine et une bande passante de la sous-bande allouée à la cellule voisine.

17. Dispositif selon la revendication 11, dans lequel le dispositif comprend en outre:
un module de détermination RB de cellule voisine, configuré pour déterminer, par rapport à toute cellule à laquelle une sous-bande a été allouée, les RB occupés par un canal de liaison descendante désigné d'une cellule voisine de la cellule de la sous-bande allouée à la cellule voisine;
un module de sélection RB, configuré pour déterminer des RB qui sont superposés avec les RB occupés par le canal de liaison descendante désigné de la cellule voisine à partir de la sous-bande allouée à la cellule; et
un module d'ajustement, configuré pour réduire une priorité d'ordonnancement des RB superposés déterminés pour être inférieure à une priorité d'ordonnancement des autres RB dans la sous-bande allouée à la cellule, ou réduire la puissance de transmission des RB superposés déterminés pour être inférieure à la puissance de transmission des autres RB dans la sous-bande allouée à la cellule,
dans lequel le module de détermination RB de cellule voisine, est configuré pour déterminer les RB occupés par la bande de fréquence avec une longueur de consigne centrale dans la sous-bande allouée à la cellule voisine comme les RB occupés par le canal de liaison descendante désigné de la cellule voisine selon une fréquence centrale de la cellule voisine et une bande passante de la sous-bande allouée à la cellule voisine.

18. Dispositif selon la revendication 11, dans lequel
le module d'attribution (12) est configuré pour attribuer une sous-bande à chaque cellule, ou allouer une pluralité de sous-bandes à au moins une cellule, dans lequel deux quelconques de la pluralité de sous-bandes allouées à un cellule identique ne se superposent pas.
